(19) Europäisches Patentamt / European Patent Office / Office européen des brevets

(11) **EP 2 038 322 B1**

(12) **FASCICULE DE BREVET EUROPEEN**

(45) Date de publication et mention de la délivrance du brevet:
**03.03.2021 Bulletin 2021/09**

(21) Numéro de dépôt: **07765038.0**

(22) Date de dépôt: **04.07.2007**

(51) Int Cl.:
***C08G 18/12*** *(2006.01)*

(86) Numéro de dépôt international:
**PCT/EP2007/005900**

(87) Numéro de publication internationale:
**WO 2008/003472 (10.01.2008 Gazette 2008/02)**

(54) **PRE-POLYMERE URETHANE-POLYESTER INSATURE ET SES APPLICATIONS**

UNGESÄTTIGTES POLYESTERURETHAN-PRÄPOLYMER UND SEINE ANWENDUNGEN

UNSATURATED POLYESTER-URETHANE PREPOLYMER AND ITS APPLICATIONS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.07.2006 FR 0606276**

(43) Date de publication de la demande:
**25.03.2009 Bulletin 2009/13**

(73) Titulaire: **Polynt Composites France
62320 Drocourt (FR)**

(72) Inventeurs:
• **BELLIARD, Patrick**
  **F-62144 Villers aux Boix (FR)**
• **MAZAJCZYK, Jérôme**
  **F-62118 Biache St Vaast (FR)**
• **DELORY, Roland**
  **F-80200 Doingt Flamicourt (FR)**
• **CLEDAT, Guillaume**
  **F-59000 Lille (FR)**
• **VERDIERE, Francis**
  **F-62153 Souchez (FR)**
• **HERMAN, Serge**
  **F-62290 Noeux Les Mines (FR)**

(74) Mandataire: **Modiano, Micaela Nadia
Modiano & Partners
Thierschstrasse 11
80538 München (DE)**

(56) Documents cités:
EP-A- 0 203 361    EP-A- 0 545 824
US-A- 4 822 849    US-A1- 4 107 101
US-A1- 4 289 682    US-A1- 4 327 145
US-A1- 5 773 531

**Description**

La présente invention concerne une résine hybride qui est, ou qui comprend un pré-polymère éthyléniquement insaturé comportant des fonctions terminales réactives X hydroxy et/ou amine ou isocyanate libre, des compositions réticulables par double voie, radicalaire et/ou condensation, ladite composition comprenant une telle résine, son procédé de préparation, les utilisations spécifiques d'une telle résine et d'une telle composition dans divers champs d'application et de mise en oeuvre.

US 4,327,145 divulgue des compositions hybrides réalisées par mélange en formulation d'un composant polyester insaturé à fort $I_{OH}$, avec un isocyanate, et éventuellement avec un peroxyde ayant un rapport de « modification isocyanate » = éq. NCO / éq. OH variant de 0,7 à 1,3, qui réagissent ensemble pour donner un semi-produit aux propriétés mécaniques améliorées par rapport à l'état de l'art cité. Cet état de l'art décrit principalement des formulations de compounds SMC (Sheet Molding Compounds) ou BMC (Bulk Molding Compounds) dans lesquels les isocyanates sont ajoutés au moment de la formulation. La modification par l'isocyanate qui conduit à la formation de groupements uréthanes est alors réalisée par le formulateur ou utilisateur final.

JP 56152829 décrit l'utilisation dans une formulation d'un polyester insaturé modifié partiellement par un isocyanate, avec utilisation d'un monoalcool saturé après réaction du polyester isocyanate, pour prévenir la gélification du système.

JP 2004-059647 décrit également une composition semblable, cette dernière étant limitée à une composition de polyester insaturé à base d'acide naphtalène dicarboxylique.

EP 545 824 décrit un pré-polymère fonctionnalisé isocyanate bloqué, par utilisation d'un large excès d'isocyanate.

US4327145A concerne un procédé de production d'un composé de moulage en feuille facilement manipulable qui comprend l'imprégnation de fibres de verre avec une composition de résine comprenant (A) un polyester insaturé ayant un indice d'hydroxyle de 20 à 55 et un indice d'acide de 5 à 20 avec un rapport indice d'hydroxyle / indice d'acide de 1,7 à 10, (B) un monomère polymérisable et (C) un composé polyisocyanate n'ayant pas plus de 20 atomes de carbone à l'exception des atomes de carbone des groupes isocyanate et choisis dans le groupe constitué par les diisocyanates et les polyméthylènepolyphénylisocyanates, les proportions des le polyester insaturé (A) et le composé polyisocyanate (C) étant tels que le rapport molaire des groupes hydroxyle du polyester insaturé (A) aux groupes isocyanate du composé polyisocyanate (C) est de 0,7 à 1,3, et ladite composition étant exempt d'oxyde ou d'hydroxyde de magnésium ou de calcium, ladite imprégnation étant effectuée de manière à ce que la teneur en fibres de verre devienne de 40 à 75% en poids; et mouler les fibres de verre imprégnées de résine en une feuille.

EP 203 361 décrit des compositions de revêtement appropriées pour la préparation de composites de revêtement en gel comprennent a) des polyesters à fonction hydroxy étendus à l'uréthane ayant un poids moléculaire inférieur à 2600 et des rapports molaires du groupe hydroxyle à la liaison uréthane de 0,5 à 6 qui sont dérivés par condensation d'acide fumarique et de certains polyols non aromatiques et carboxyle. les acides; ou b) des résines acrylate ayant un poids moléculaire jusqu'à 3.000 et une fonctionnalité éthyléniquement insaturée attachée à la résine de squelette acrylate par des liaisons ester ou uréthane.

US 4289682 décrit une composition de résine durcissable comprenant un mélange homogène d'un oligomère de polyester insaturé à terminaison hydroxyle, d'un polyisocyanate, d'un monomère éthyléniquement insaturé et d'un catalyseur de formation de polyuréthane.

US 4107101 décrit un procédé de production de matières plastiques réticulées comprenant la réaction de polyisocyanates organiques, de composés organiques polyhydroxylés et de monomères oléfiniquement insaturés, éventuellement en présence de catalyseurs et / ou d'autres auxiliaires et additifs.

US 4822849 décrit des compositions de polyester insaturé comprenant (a) un prépolymère de polyester insaturé et (b) un monomère vinylique copolymérisable avec le prépolymère, qui sont durcies par addition de (c) un polyisocyanate, (d) un catalyseur de peroxyde et, éventuellement, (e) un peroxyde activateur et un catalyseur uréthane.

L'utilisation selon l'état de l'art dans une formulation d'application SMC ou BMC, d'un système bi-composant à base d'un polyester insaturé polyol et d'un polyisocyanate présente plusieurs inconvénients.

En effet, l'exothermie de la réaction entre l'isocyanate et le polyester insaturé provoque une élévation de température importante sur machine lors de la fabrication du SMC ou du BMC.

Le formulateur final doit alors utiliser des machines d'imprégnation spécifiques pour la technologie hybride, capables de refroidir le SMC ou le BMC.

De plus, le fait de réaliser l'intégralité de la modification à l'isocyanate au moment de la formulation du SMC, provoque une diminution importante de la viscosité de la pâte SMC ou BMC hybride au début de sa fabrication, du fait de la faible viscosité de l'isocyanate. L'imprégnation est alors rendue très délicate car la formulation hybride, trop fluide, essore et conduit à des débordements de résine au niveau de la machine d'imprégnation du SMC ou du BMC.

Enfin, la technique classique décrite dans la littérature requiert l'utilisation de grandes quantités d'isocyanate par le formulateur final, ce produit étant connu pour être nocif, et son effet allergisant nécessitant des précautions et conditions particulières de manipulation. Cette contrainte impose sa manipulation dans un endroit fortement ventilé.

La présente invention propose de remédier à tous ces inconvénients, et en particulier de réduire ou d'éliminer l'utilisation de polyisocyanates par le formulateur final, par l'utilisation de pré-polymères spécifiques (comportant déjà des liaisons uréthanes) définis ci-dessous selon la présente invention, ces pré-polymères permettant un meilleur contrôle de la réaction lors de la formulation par l'utilisateur final, une amélioration de la reproductibilité des pièces moulées, ainsi que des conditions standards de préparation et de moulage de la formulation sans précautions particulières exigées dans le cas de la manipulation du polyisocyanate par voie classique telle que décrite dans l'état de l'art. Ces avantages sont obtenus sans affecter négativement les performances applicatives finales, tout en apportant dans certains cas des améliorations significatives.

L'utilisation de pré-polymères à fonctions terminales hydroxy et/ou amine ou isocyanate libre selon la présente invention, surmonte les inconvénients cités ci-dessus, dans le cas de formulations type SMC ou BMC, mais aussi dans d'autres types d'applications, utilisant la double réticulation par voie radicalaire et par voie de condensation isocyanate avec d'autres fonctions réactives portées par la résine. Comme telles autres applications, on peut citer les compositions de moulage, composites, composites allégés, y compris mousses, stratifiés, pré-imprégnés, mastics, colles, revêtements, barrier coats, gel coats, revêtements IMC (In Mold Coatings), bétons polyesters, marbres artificiels, et la réparation in situ de canalisations enterrées, y compris de conduites (pipes) pétrolières ou de conduites d'eau.

La présente invention propose deux types de pré-polymères.

Selon un premier concept de l'invention, le polyester insaturé est livré chez l'utilisateur final sous forme de pré-polymère uréthane-polyol insaturé, obtenu par une modification isocyanate dudit polyester, avec un rapport r = NCO/OH exprimé en équivalents correspondant à un défaut significatif d'isocyanate, et où OH représente au sens le plus large toute les fonctions de la résine polyester insaturée réactive avec NCO.

Selon le concept de l'invention, une première modification à l'isocyanate est réalisée par le fabricant (fournisseur) de résine, sur une résine polyester polyol insaturé pour donner lieu audit pré-polymère, et l'utilisateur final ajoute ensuite audit pré-polymère ainsi obtenu (fourni par le fabricant de résine) la deuxième fraction d'isocyanate nécessaire pour la réaction avec les fonctions OH dudit pré-polymère au moment de la formulation, par exemple du SMC ou du BMC ou d'une autre composition.

Le mélange (formulation) effectué par l'utilisateur est alors réalisé d'une manière telle que r = NCO / OH exprimé en équivalents est fixé dans une plage variant de 0,6 à 1,1, où OH représente au sens le plus large toutes les fonctions réactives avec NCO dudit pré-polymère et éventuellement des autres composants du mélange, réactifs vis-à-vis dudit isocyanate.

La modification isocyanate étant fractionnée entre la production de résine pré-polymère uréthane-polyol et la fabrication du SMC ou du BMC ou d'autre, par le formulateur final, il en résulte une diminution conséquente de l'exothermie sur la machine d'imprégnation courante, sans besoin d'un système de refroidissement pour évacuer la chaleur dégagée. On peut alors revenir aux machines d'imprégnation standards, sans risquer d'avoir un report de l'exothermie réactionnelle sur le rouleau SMC au cours de l'étape de maturation.

D'autre part, la résine polyester insaturé ainsi pré-épaissie par la modification sous forme de pré-polymère, conduit à un meilleur confort de formulation lors de la réalisation de la pâte SMC ou BMC ou d'autre formulation, et à l'élimination des problèmes d'essorage ou de débordement de la résine lors de la fabrication de la pâte (viscosité plus convenable).

De plus, la quantité d'isocyanate nécessaire pour faire réagir le prépolymère uréthane-polyol en formulation est réduite significativement par rapport à la voie classique (jusqu'à la moitié par rapport à la voie classique). Le procédé utilisant le pré-polymère selon la présente invention est donc intrinsèquement moins polluant et plus sécurisant sur l'aspect de la manipulation par le formulateur final. Ceci est sans compter un autre avantage concernant l'amélioration du contrôle de la reproductibilité des étapes de maturation et de moulage des pièces, avec un meilleur contrôle et ajustement de la fonctionnalité et des proportions de réactants et de la réaction en général.

Le premier pré-polymère, tel que décrit précédemment, est porteur de fonctions hydroxy et/ou amine, et peut réagir avec un polyisocyanate dans une formulation d'application type SMC/BMC, mais en moindre quantité globale d'isocyanate, du fait qu'une partie de l'isocyanate sert déjà à la préparation dudit pré-polymère, en tant que constituant de ladite formulation.

Selon un deuxième concept, le pré-polymère selon l'invention porte des fonctions terminales isocyanates libres. Ledit pré-polymère est préparé, ainsi que stocké avant usage, sous atmosphère inerte vis à vis des fonctions NCO. Dans ce cas, le formulateur final n'a pas besoin d'utiliser d'isocyanate, dans la mesure où ledit pré-polymère peut le remplacer. Suivant ce deuxième concept d'utilisation, ledit pré-polymère fonctionnalisé isocyanate libre (préparé et fourni par le fabricant de résine), peut réagir soit avec une résine polyol (ou de fonctionnalité amine), tel qu'un polyester polyol insaturé, soit avec un pré-polymère uréthane-polyol, tel que décrit dans le premier concept d'utilisation selon l'invention.

Pour le formulateur final, le composant pré-polymère terminé isocyanate est alors mélangé soit avec la résine à fonctionnalité hydroxy et/ou amine de type polyester insaturé à fort $I_{OH}$ (indice d'hydroxyle) ou à fort $I_{NH2}$ (indice d'amine), ou à un pré-polymère terminé hydroxy et/ou amine tel que défini selon le premier concept dans des proportions calculées pour avoir un mélange effectué par l'utilisateur réalisé d'une manière telle que : r = NCO / OH exprimé en équivalents est fixé dans une plage variant de 0,6 à 1,1, où OH représente toutes les fonctions réactives avec NCO présentes dans ledit mélange de formulation d'application, telle que SMC/BMC.

Cette deuxième voie permet, encore plus que dans le cas de la première voie, de limiter les exothermies développées lors de la réalisation du SMC, de travailler avec des viscosités de départ plus élevées par rapport aux voies classiques, et enfin de supprimer l'utilisation d'un isocyanate (poly ou di-isocyanate) classique de faible masse moléculaire présentant les inconvénients cités précédemment, lors de la formulation par l'utilisateur final pour réaliser les SMC ou BMC ou autres formulations hybrides (qui ont parmi les composants réactifs : un polyisocyanate et un polyester insaturé).

Ainsi, le premier objet de la présente invention concerne un pré-polymère éthyléniquement insaturé comportant au moins une terminaison X réactive par condensation, choisie parmi les groupements hydroxy et/ou amine ou isocyanate libre, et éventuellement une terminaison X' d'insaturation éthylénique, ledit pré-polymère ayant une masse moyenne en nombre Mn (mesurée par GPC avec étalons polystyrènes) allant de 1000 à 5000, de préférence de 1200 à 4500 et un indice X exprimé en mg KOH/ g, allant de 30 à 150, de préférence de 35 à 120, avec ledit pré-polymère étant le produit de réaction des composants A et B suivants :

A) un premier composant A comprenant le mélange suivant :

i) au moins une première résine éthyléniquement insaturée portant des terminaisons réactives hydroxy et/ ou aminé, choisie parmi les polyesters insaturés ayant un indice OH (mesuré sur résine solide non diluée) de 70 à 170 mg KOH /g et un indice d'acide (mesuré sur résine à l'état solide non dilué) inférieur à 10 mg KOH/ g, les dits polyesters insaturés étant à bas d'un composant acide comprenant au moins l'acide et/ou anhydride maléique et/ou l'acide fumarique avec un acide et/ou anhydride aromatique dans un rapport molaire maléique/aromatique allant de 0,6/0,4 à 0,4/0,6, ladite résine étant diluée dans au moins un monomère éthyléniquement insaturé copolymérisable avec l'insaturation éthylénique de ladite résine,
ii) éventuellement, en présence d'au moins une deuxième résine différente de la résine i), choisie parmi :

- les résines hydroxylées éthyléniquement insaturées, et de préférence parmi les polyesters insaturés, les polyesteramides insaturés, les polyuréthanesters insaturés ou les vinyl esters, en dilution dans au moins un monomère éthyléniquement insaturé, et/ ou

- les résines saturées hydroxylées et/ ou aminées, en dilution dans au moins un monomère éthyléniquement insaturé, et/ ou

iii) éventuellement, au moins une troisième résine saturée réactive, choisie parmi les polyéthers polyols ou polyesters polyols ou polyamines ou polyépoxydes, de fonctionnalité 2 ou 3, et de préférence de fonctionnalité 2, et de masse moléculaire Mn inférieure à 400 g/ mol, et
iv) en option, au moins un monoalcool insaturé, lié à la présence éventuelle de ladite terminaison éthylénique X', jusqu'à 30% en équivalents du total OH + NH2, et de préférence inférieure à 20% en équivalents du total OH + NH2 provenant de i) + ii) + iii) + iv), avec la teneur en eau dudit composant A ne depassant pas 1000 ppm,

B) un deuxième composant B comprenant au moins un polyisocyanate de fonctionnalité égale ou supérieure à 2, et pouvant aller jusqu'à 3, et de préférence de fonctionnalité 2, et
avec dans le cas où la fonctionnalité est supérieure à 2, soit pour le composant A, soit pour le composant B, obtention desdits pré-polymères dans des conditions telles que les proportions de A et B, et la fonctionnalité moyenne du mélange réactionnel A et B, satisfont la relation de Macosko-Miller, afin d'éviter toute gélification par réticulation, avec par fonctionalité X choisie les conditions suivantes :

- pour X = OH et/ ou aminé, un rapport en équivalents r = NCO / (OH + NH2) allant de 0,01 à 0,6, de préférence de 0,2 à 0,5 et avec ledit composant B étant additionné, de préférence progressivement, dans ledit composant A, et
- pour X = NCO libre, un rapport en équivalents r = NCO / (OH + NH2) allant de 1 ,2 à 3, de préférence de 1,5 à 2,5 et avec ledit composant A étant additionné, de préférence progressivement, dans ledit composant B. Un deuxième objet de l'invention concerne un procédé spécifique de préparation du pré-polymère selon l'invention, caractérisé en ce qu'il comprend les étapes successives suivantes en fonction de la fonctionnalité X:
- pour X = OH et/ ou NH2:
- chargement en pied du réacteur du composant A, tel que défini précédemment, avec un contrôle de la teneur en eau pour ne pas dépasser 1000 ppm, et de préférence inférieur à 600 ppm,

- addition, de préférence progressive, du composant B dans ledit composant A, de manière à avoir un excès de OH + NH2 correspondant à un rapport en équivalents r = NCO / (OH + NH2) variant de 0,01 à 0,6, et de préférence de 0,2 à 0,5, et en option ou si nécessaire, en présence d'un catalyseur de la réaction des fonctions OH avec les fonctions NCO,
- réaction jusqu'à disparition quasi complète des groupements NCO, correspondant ici à un indice (à l'état dilué) de NCO équivalent à < 6 mg KOH/g, dans des conditions d'absence de tout risque de gélification par réticulation, comme défini plus haut,
- éventuellement, addition d'un stabilisant,
- pour X = NCO libre :
- chargement en pied du réacteur dudit composant B comprenant ledit polyisocyanate en présence d'au moins un monomère éthyléniquement insaturé tel que défini précédemment, monomères dont on aura contrôlé au préalable, avant l'addition de l'isocyanate, la teneur en eau, de manière à ne pas dépasser 10 ppm, si nécessaire par réaction de consommation avec un monoisocyanate, tel que le tosylisocyanate,
- contrôle de la teneur en eau du composant A, de manière à ne pas dépasser 1000 ppm, et de préférence 500 ppm,
- si nécessaire, réduction de la teneur en eau du composant A, par réaction de consommation avec un monoisocyanate,
- addition, de préférence progressive, du composant A sur ledit composant B comprenant ledit polyisocyanate en excès en pied du réacteur, avec un rapport en équivalents r = NCO / (OH + NH2) variant de 1,2 à 3, et de préférence de 1,5 à 2,5,
- réaction jusqu'à disparition quasi complète des groupements OH (et groupements équivalents), ce qui correspond ici à un indice (à l'état dilué) équivalent à < 3 mg KOH /g, dans des conditions d'absence de tout risque de gélification par réticulation comme défini selon la revendication 1 , et
- en option, à l'étape de réaction, présence d'un catalyseur de la réaction des fonctions OH avec les fonctions NCO, et
- en option, stabilisation par addition d'un stabilisant.

Fait aussi partie de la présente invention, le pré-polymère susceptible d'être obtenu par réaction, ou qui est le produit de réaction d'au moins un pré-polymère défini selon l'invention portant X = NCO libre, avec un composant réactif comportant des fonctions Y réactives avec lesdites fonctions réactives X.

L'invention couvre également une composition de résine réticulable comprenant au moins un desdits pré-polymères, tels que définis précédemment, ou obtenue par le procédé selon l'invention.

La présente invention couvre aussi un procédé de préparation d'une telle composition réticulable, ledit procédé comprenant au moins l'étape d'addition d'au moins un pré-polymère selon l'invention dans ladite composition réticulable.

Fait également partie de l'invention, l'utilisation d'au moins un pré-polymère de l'invention ou d'une composition réticulable le contenant, dans des compositions ou applications de moulage, composites, y compris composites allégés, en particulier mousses, SMC, BMC, stratifiés, pré-imprégnés, revêtements, mastics, colles, barrier coats, gel coats, revêtements IMC, bétons polyesters, marbres artificiels, et dans la réparation in situ de canalisations enterrées, y compris de conduites (pipes) pétrolières ou de conduites d'eau.

Diverses utilisations plus particulières desdits pré-polymères et desdites compositions réticulables, font aussi parties de l'invention :

l'utilisation d'au moins un pré-polymère de l'invention libre en modifiant au moins en partie ou quantitativement les fonctions X (telles que X = NCO libres), pour la préparation d'un autre prépolymère fonctionnel, ou à la préparation de mastics auto- réticulables par voie de réticulation duale avec possibilité de réticulation radicalaire supplémentaire (aux deux voies) ou non, en présence d'humidité de l'air (pour X = NCO libre) et à température ambiante, l'utilisation desdits pré-polymères dans la préparation de compositions réticulables par voie peroxyde ou hydroperoxyde à basse température en présence d'accélérateur de décomposition ou par chauffage à température plus élevée ou sous rayonnement en présence ou absence de photoamorceur.

L'invention couvre également un procédé de mise en œuvre d'une composition réticulable selon l'invention, comprenant au moins une étape d'application ou de mise en oeuvre à la main, au pistolet, par imprégnation, par enroulement filamentaire, par pultrusion, par injection, par compression, par infusion IMC, par coulée, par centrifugation, par RTM (Resin Transfer Molding) et par RIM (Reaction Injection Molding).

Enfin, le dernier objet de l'invention concerne un article fini obtenu par réticulation d'au moins une composition réticulable de l'invention qui est sélectionnée parmi les pièces moulées (résultant des compositions de moulage), composites, y compris composites allégés, en particulier mousses, stratifiés, pré-imprégnés, mastics, colles, revêtements, barrier coats, gel coats, revêtements IMC, bétons polyesters, marbres artificiels, panneaux sandwich d'isolation, moyens de protection thermique et mécanique (boucliers), et plus particulièrement des moyens et équipements de protection individuelle (casques, boucliers, chaussures de sécurité, etc), planchers passerelles, pâles d'éoliennes, pièces automobiles, peintures marines, pièces mécaniques, canalisations enterrées, y compris conduites (pipes) pétrolières ou conduites d'eau.

Ainsi, le premier objet de la présente invention est un pré-polymère éthyléniquement insaturé comportant au moins une terminaison X réactive par condensation, choisie parmi les groupements hydroxy et/ ou aminé ou isocyanate libre, et éventuellement une terminaison X' à insaturation éthylénique, ledit pré-polymère ayant une masse moyenne en nombre Mn (mesurée par GPC avec étalons polystyrènes) allant de 1000 à 5000, de préférence de 1200 à 4500 et un indice X exprimé en mg KOH/ g, allant de 30 à 150, de préférence de 35 à 120, avec ledit pré-polymère étant le produit de réaction des composants A et B suivants :

A) un premier composant A comprenant le mélange suivant :

i) au moins une première résine éthyléniquement insaturée portant des terminaisons réactives hydroxy et/ ou aminé, choisie parmi les polyesters insaturés ayant un indice OH (mesuré sur résine solide non diluée) de 70 à 170 mg KOH /g et un indice d'acide (mesuré sur résine à l'état solide non dilué) inférieur à 10 mg KOH/ g, les dits polyesters insaturés étant à bas d'un composant acide comprenant au moins l'acide et/ou anhydride maléique et/ou l'acide fumarique avec un acide et/ou anhydride aromatique dans un rapport molaire maléique/aromatique allant de 0,6/0,4 à 0,4/0,6, ladite résine étant diluée dans au moins un monomère éthyléniquement insaturé copolymérisable avec l'insaturation éthylénique de ladite résine,

ii) éventuellement, en présence d'au moins une deuxième résine différente de la résine i), choisie parmi :

- les résines hydroxylées éthyléniquement insaturées, et de préférence parmi les polyesters insaturés, les polyesteramides insaturés, les polyuréthanesters insaturés ou les vinyl esters, en dilution dans au moins un monomère éthyléniquement insaturé, et/ ou

- les résines saturées hydroxylées et/ ou aminées, en dilution dans au moins un monomère éthyléniquement insaturé, et/ ou

iii) éventuellement, au moins une troisième résine saturée réactive, choisie parmi les polyéthers polyols ou polyesters polyols ou polyamines ou polyépoxydes, de fonctionnalité 2 ou 3, et de préférence de fonctionnalité 2, et de masse moléculaire Mn inférieure à 400 g/ mol, et

iv) en option, au moins un monoalcool insaturé, lié à la présence éventuelle de ladite terminaison éthylénique X', jusqu'à 30% en équivalents du total OH + NH2, et de préférence inférieure à 20% en équivalents du total OH + NH2 provenant de i) + ii) + iii) + iv), avec la teneur en eau dudit composant A ne depassant pas 1000 ppm,

B) un deuxième composant B comprenant au moins un polyisocyanate de fonctionnalité égale ou supérieure à 2, et pouvant aller jusqu'à 3, et de préférence de fonctionnalité 2, et
avec dans le cas où la fonctionnalité est supérieure à 2, soit pour le composant A, soit pour le composant B, obtention desdits pré-polymères dans des conditions telles que les proportions de A et B, et la fonctionnalité moyenne du mélange réactionnel A et B, satisfont la relation de Macosko-Miller, afin d'éviter toute gélification par réticulation, avec par fonctionalité X choisie les conditions suivantes :

- pour X = OH et/ ou aminé, un rapport en équivalents r = NCO / (OH + NH2) allant de 0,01 à 0,6, de préférence de 0,2 à 0,5 et avec ledit composant B étant additionné, de préférence progressivement, dans ledit composant A, et
- pour X = NCO libre, un rapport en équivalents r = NCO / (OH + NH2) allant de 1 ,2 à 3, de préférence de 1,5 à 2,5 et avec ledit composant A étant additionné, de préférence progressivement, dans ledit composant B. Comme indiqué plus haut, deux types de pré-polymères sont ainsi obtenus avec par fonctionnalité X choisie, les conditions nécessaires suivantes :

pour X = OH et/ou amine, avec un rapport en équivalents r = NCO / (OH + NH$_2$) allant de 0,01 à 0,6, de préférence de 0,2 à 0,5 et avec ledit composant B étant additionné (de préférence progressivement) dans ledit composant A,
et
pour X = NCO libre, avec un rapport en équivalents r = NCO / (OH + NH$_2$) allant de 1,2 à 3, de préférence de 1,5 à 2,5 et avec ledit composant A étant additionné (de préférence progressivement) dans ledit composant B.

La relation de Macosko-Miller citée ci-haut, est telle que définie selon Macromolecules, vol. 9, pages 199-211 (1976) et est considérée comme bien connue de l'homme du métier. Pour plus de clarté, nous rappelons ci-dessous cette relation, qui relie le rapport critique (au point de gel) $r_c$ = NCO/(OH + NH$_2$) avec la fonctionnalité (X) moyenne de A, $f_A$, et de B, $f_B$ avec le taux de conversion au point de gélification $x_g$ :

$$r_c * x_g^2 = 1 \ / \ ((f_B-1) * (f_A-1))$$

Cela signifie, par exemple, que dans le cas du pré-polymère avec X = NCO libre, avec l'addition (progressive) de A dans B (donc avec r décroissant progressivement de l'infini jusqu'à vers 1,2 au plus), et pour $f_A$ = 2,3, fB = 2 (fonctionnalités moyennes de A et de B fixées) et taux de conversion de 100%, il faudra avoir un r < $r_c$ = 0,76 pour avoir une gélification. Donc, il faudra r bien supérieur à $r_c$ (environ 2 fois) pour éviter tout risque de gélification.

Dans le cas inverse, du pré-polymère avec X = OH et/ou NH$_2$, avec l'addition (progressive) de B dans A (donc avec r passant de 0 à 0,6) avec les mêmes fonctionnalités moyennes $f_A$ et fB pour x = 1 (100% de conversion), il faudra avoir r > $r_c$ = 0,76 pour avoir une gélification. Donc, pour éviter tout risque de gélification, il faudra travailler avec r << $r_c$ = 0,76.

Le terme « fonctionnalité supérieure à 2 », soit pour A soit pour B, énoncé comme cas particulier présentant un risque de gélification par réticulation, doit être interprété ici comme signifiant « fonctionnalité moyenne en nombre (de moles) supérieure à 2 », soit pour A, soit pour B, dans le cas où, soit A, soit B, est un mélange d'au moins deux constituants réactifs portant des fonctions X telles que définies ci-haut. D'ailleurs, la relation de Macosko-Miller pourrait être remplacée par la condition alternative équivalente d'obtention desdits pré-polymères avec une fonctionnalité (X) moyenne en nombre (par mole de constituant réactif X) du mélange réactionnel de A et de B contrôlée pour être inférieure ou égale à 2. Si fi est la fonctionnalité d'un constituant i du mélange (A + B ici) et m le nombre de moles de ce constituant i, dans ce cas, la fonctionnalité moyenne en nombre est $f_m$ = $\Sigma$i ni*fi / $\Sigma$i ni.

Le terme « réactive » dans l'expression « terminaison réactive X » signifie d'une manière générale que l'indice X correspondant est supérieur à un indice équivalent à 6 mg KOH/g lorsque X = NCO, et supérieur à 3 mg KOH/g lorsque X = OH ou NH$_2$.

Ledit pré-polymère peut avoir une masse équivalente par insaturation éthylénique du squelette dudit pré-polymère variant de 150 à 2000 g/mol, de préférence de 170 à 1500. Cette masse équivalente par insaturation peut être calculée directement à partir du bilan massique des composants réactifs (mélange de A et B).

L'indice X dudit pré-polymère, exprimé en équivalents de mg KOH/g, varie de 30 à 150 mg KOH/g, et de préférence de 35 à 120 mg KOH/g, cet indice étant mesuré sur le pré-polymère à l'état dilué par des comonomères, pouvant aller de 20 à 55%, de préférence de 25 à 45% en poids de comonomères par rapport au poids total pré-polymère + comonomères.

Les résines de type i), ii) et iii) selon l'invention sont diluées dans au moins un monomère portant au moins une fonction éthyléniquement insaturée, qui peut être choisi parmi les monomères vinyliques et/ou (méth)acryliques et/ou allyliques. Le taux de ce monomère peut varier de 20 à 55%, et de préférence de 25 à 40% en poids. Ce monomère est de préférence sélectionné parmi les monomères vinylaromatiques, comme le styrène et ses dérivés ou les vinyl toluènes, (méth)acrylates, allyliques, maléates, les monomères et/ou oligomères (méth) acryliques multifonctionnels.

Le pré-polymère de l'invention peut comprendre un produit ou est composé d'un produit, de formule générale suivante :

R-(X)n-mX'm

avec : n allant de 1,5 à 3, et de préférence de 1,5 à 2,5, et m allant de 0 à 0,5, et de préférence de 0 à 0,3, et R étant le radical global résultant de la réaction de A avec B, qui porte lesdites terminaisons X, et éventuellement X', et avec X = OH et/ou amine ou NCO libre, et

X' = insaturation éthylénique, pouvant être (méth)acrylique, vinylique ou allylique.

L'insaturation X' peut être présente aussi bien avec les fonctions X = OH et/ou amine qu'avec X = NCO libre et dans ce cas, l'indice m peut varier entre 0 et 0,5, de préférence entre 0 et 0,3, et plus préférentiellement de 0,01 à 0,3.

Le taux en poids dudit pré-polymère, par rapport au poids total de pré-polymère + monomères éthyléniquement insaturés, peut varier entre 45 et 80%, et de préférence entre 60 et 75%, avec une masse moléculaire Mn allant de 1000 à 5000 g/mol, et de préférence de 1200 à 4500 g/mol. Toutes les masses moléculaires moyennes citées (Mn, Mw) sont déterminées par GPC avec étalonnage polystyrène (masses exprimées en équivalents polystyrènes). On peut aussi calculer la masse Mn (dans ce cas Mn calculée) à partir de l'indice de fonctionnalité finale (X). Dans ce cas, la Mn calculée peut varier de 550 à 2500, qui correspond environ à la plage de la Mn mesurée via GPC en équivalents polystyrènes de 1200 à 4500.

Ladite résine i) peut représenter de 70 à 100%, et ladite résine ii) de 0 à 30% ou jusqu'à 30% en poids du poids total i) + ii) + iii), ladite résine i) ayant une masse équivalente par insaturation pouvant aller de 140 à 2000, et de préférence de 140 à 1250 g/mol, et ladite résine ii) ayant une masse équivalente par insaturation pouvant aller de 200 à 2500 g/mol, et de préférence de 200 à 1500 g/mol, mesurée par bilan de matière (il correspond au poids total divisé par le nombre d'insaturations éthyléniques présentes).

Quand ladite résine iii) est présente, elle peut représenter de 1 à 15% en poids du poids total i) + ii) + iii). Ladite résine i) est au moins le polyester insaturé comme definit plus haut.

Ladite résine ii) peut être au moins un polyester insaturé et/ou au moins un vinyl ester.

Lesdites résines de polyester insaturé convenables pour la resine i) de l'invention sont à base d'au moins un diacide ou anhydride éthyléniquement insaturé tel que l'acide ou anhydride maléique et/ou fumarique (acide), et être ou pas, modifiées par le dicyclopentadiène (DCPD). Eventuellement, au moins un diacide ou anhydride carboxylique saturé peut être présent avec ledit diacide insaturé, tel que les acides ortho-, iso- (acide), téré-phtalique (acide) ou adipique (acide), ou un diacide ou anhydride cycloaliphatique, tel que l'acide CHDA (acide cyclohexanedicarboxylique). Des exemples de telles combinaisons entre diacides ou anhydrides insaturés et saturés sont les polyesters iso- ou ortho-, ou téré-phtaliques/maléates, lesdits maléates pouvant être modifiés DCPD. Suivant la presente invention, lesdites résines de polyesters insaturés hydroxylés sont à base d'un composant acide comprenant au moins l'acide et/ou anhydride maléique et/ou l'acide fumarique avec un acide et/ou anhydride aromatique tel que téréphtalique, éventuellement avec au moins un autre acide ou anhydride parmi ceux cités ci-haut, dans un rapport molaire maléique/aromatique (tel que téréphtalique) allant de 0,6/0,4 à 0,4/0,6. Pour préparer lesdites résines, lesdits diacides ou anhydrides réagissent avec au moins un polyol tel que le propylène glycol (PG), l'éthylène glycol (EG), le diéthylène glycol (DEG), le néopentyl glycol (NPG), le butyl-éthyl-propanediol (BEPD), le butanediol, le triméthylolpropane (TMP), le dipropylèneglycol (DPG), le triméthyl- 2,2',4-pentanediol-1,3 (TMPD) ou méthyl-2-propanediol-1,3 (MPD). Le composant polyol est en excès par rapport au composant acide, entre 10 et 30% molaire. De préférence, le composant polyol comprend au moins un polyol greffé en $C_4$-$C_9$, avec des greffons méthyl et/ou éthyl, tels que NPG, TMPD, BEPD ou MPD. Au moins un diol linéaire y est associé, de préférence EG et/ou PG. Comme exemple préféré de combinaison entre linéaire et ramifié, on peut citer EG et/ou PG avec NPG et/ou BEPD. Comme indiqué déjà, le rapport molaire selon l'invention est un rapport molaire linéaire/greffé allant de 0,4/0,6 à 0,6/0,4.

Lesdites résines de polyester insaturé convenables pour la résine ii) l'invention peuvent être à base d'au moins un diacide ou anhydride éthyléniquement insaturé tel que l'acide ou anhydride maléique, fumarique (acide), itaconique, tétrahydrophtalique (THP), et être ou pas, modifiées par le dicyclopentadiène (DCPD). Eventuellement, au moins un diacide ou anhydride carboxylique saturé peut être présent avec ledit diacide insaturé, tel que les acides ortho-, iso- (acide), téré-phtalique (acide) ou adipique (acide), ou un diacide ou anhydride cycloaliphatique, tel que l'acide CHDA (acide cyclohexanedicarboxylique). Des exemples de telles combinaisons entre diacides ou anhydrides insaturés et saturés sont les polyesters iso- ou ortho-, ou téré-phtaliques/maléates, lesdits maléates pouvant être modifiés DCPD ou non et plus préférentiellement lesdites résines de polyesters insaturés hydroxylés sont à base d'un composant acide comprenant au moins l'acide et/ou anhydride maléique avec un acide et/ou anhydride aromatique tel que téréphtalique, éventuellement avec au moins un autre acide ou anhydride parmi ceux cités ci-haut, de préférence dans un rapport molaire maléique/aromatique (tel que téréphtalique) allant de 0,6/0,4 à 0,4/0,6. Pour préparer lesdites résines, lesdits diacides ou anhydrides réagissent avec au moins un polyol tel que le propylène glycol (PG), l'éthylène glycol (EG), le diéthylène glycol (DEG), le néopentyl glycol (NPG), le butyl-éthyl-propanediol (BEPD), le butanediol, le triméthylolpropane (TMP), le dipropylèneglycol (DPG), le triméthyl- 2,2',4-pentanediol-1,3 (TMPD) ou méthyl-2-propanediol-1,3 (MPD). Le composant polyol est en excès par rapport au composant acide, entre 10 et 30% molaire. De préférence, le composant polyol comprend au moins un polyol greffé en C4-C9, avec des greffons méthyl et/ou éthyl, tels que NPG, TMPD, BEPD ou MPD. Au moins un diol linéaire y est associé, de préférence EG et/ou PG. Comme exemple préféré de combinaison entre linéaire et ramifié, on peut citer EG et/ou PG avec NPG et/ou BEPD. Comme exemple de rapport molaire préféré, on peut citer un rapport molaire linéaire/greffé allant de 0,4/0,6 à 0,6/0,4.

Lesdits vinylesters convenables pour la résine ii) de l'invention sont les produits de réaction d'un diépoxy, tel que le diglycidyléther de bisphénol A (DGEBA) hydrogéné ou non, l'époxynovolac, ou un diépoxy cycloaliphatique ou aliphatique, avec un monoacide éthyléniquement insaturé, tel que l'acide (méth)acrylique, éventuellement en présence d'un diacide éthyléniquement insaturé tel que l'acide maléique ou itaconique, et éventuellement en présence d'autres diacides aromatiques ou (cyclo) aliphatique s, tels que ceux cités précédemment, en tant qu'agents d'extension. Le diépoxy peut être alkoxylé avec au moins 1 à 3 unités alkoxy, tels que l'éthoxy et/ou le propoxy par unité époxy, avant estérification, la fonctionnalité en insaturation terminale étant de préférence 2.

Ledit polyisocyanate pour le composant B peut être sélectionné parmi le MDI (diphénylméthanediisocyanate), IPDI (isophorone diisocyanate), H12MDI (dicyclohexylméthanediisocyanate), TDI (toluènediisocyanate), HDI (hexaméthylènediisocyanate), triisocyanurate (triisocyanate d'isocyanurate) du HDI, isocyanates dérivés d'urétidione, d'allophanate et de biuret des diisocyanates précédents.

Comme déjà cité ci-haut, selon une première possibilité, le pré-polymère de l'invention porte une fonction réactive X = hydroxy et/ou amine, auquel cas le rapport en équivalents r = NCO / (OH + NH$_2$) pour la réaction de A avec B varie de 0,01 à 0,6, et de préférence de 0,2 à 0,5, avec addition progressive du composant B dans le composant A (excès de OH). Dans ce cas, un stabilisant peut être utilisé tel que l'hydroquinone ou ses dérivés, les phénols stériquement encombrés, par exemple le ditertiobutylparacrésol ou le ditertiobutylhydroxyanisol ou le monotertiobutylhydroquinone, en quantité pouvant aller de 10 à 500 ppm, et de préférence de 30 à 300 ppm.

Selon la deuxième possibilité, la fonction réactive X est un isocyanate libre, auquel cas le rapport en équivalents $r = NCO / (OH + NH_2)$ peut varier de 1,2 à 3, et de préférence de 1,5 à 2,5. Le stabilisant préféré dans ce cas est une combinaison BHT + PTZ (phénothiazine) en quantité allant de 20 à 1000 ppm, et de préférence de 60 à 700 ppm.

Le deuxième objet de l'invention est un procédé de préparation du pré-polymère de l'invention. En fonction de la fonctionnalité X, ce procédé comprend les étapes successives suivantes :

- pour $X = OH$ et/ou $NH_2$ :
chargement en pied du réacteur du composant A, tel que défini précédemment, avec un contrôle de la teneur en eau pour ne pas dépasser 1000 ppm, et de préférence inférieur à 600 ppm, addition, de préférence progressive, du composant B dans ledit composant A, de manière à avoir un excès de $OH + NH_2$ correspondant à un rapport en équivalents $r = NCO / (OH + NH_2)$ variant de 0,01 à 0,6, et de préférence de 0,2 à 0,5, et en option ou si nécessaire, en présence d'un catalyseur de la réaction des fonctions OH avec les fonctions NCO, réaction jusqu'à disparition quasi complète des groupements NCO, correspondant ici à un indice (à l'état dilué) de NCO équivalent à < 6 mg KOH/g, dans des conditions d'absence de tout risque de gélification par réticulation, comme décrit ci-haut, éventuellement, addition d'un stabilisant,

- pour X = NCO libre :

    chargement en pied du réacteur dudit composant B comprenant ledit polyisocyanate en présence d'au moins un monomère éthyléniquement insaturé tel que défini précédemment, monomères dont on aura contrôlé au préalable, avant l'addition de l'isocyanate, la teneur en eau, de manière à ne pas dépasser 10 ppm, si nécessaire par réaction de consommation (de l'eau) avec un monoisocyanate, tel que le tosylisocyanate, contrôle de la teneur en eau du composant A, de manière à ne pas dépasser 1000 ppm, et de préférence 500 ppm, si nécessaire, réduction de la teneur en eau du composant A, par réaction de consommation avec un monoisocyanate, addition, de préférence progressive, du composant A sur ledit composant B comprenant ledit polyisocyanate en excès en pied du réacteur, avec un rapport en équivalents $r = NCO / (OH + NH_2)$ variant de 1,2 à 3, et de préférence de 1,5 à 2,5, réaction jusqu'à disparition quasi complète des groupements OH (et groupements équivalents), ce qui correspond ici à un indice (à l'état dilué) équivalent à < 3 mg KOH/g, et dans des conditions d'absence de tout risque de gélification par réticulation, comme décrit ci-haut, et en option, à l'étape de réaction, présence d'un catalyseur de la réaction des fonctions OH avec les fonctions NCO, et en option, stabilisation par addition d'un stabilisant, tel que défini ci-haut, la préparation et le stockage dudit pré-polymère ayant lieu sous conditions d'atmosphère inerte (atmosphère non réactive, avec teneur en eau contrôlée) vis-à-vis dudit polyisocyanate.

Les conditions d'absence de tout risque de gélification sont à intégrer dans les conditions de ce procédé, comme déjà décrit ci-haut concernant l'obtention desdits pré-polymères : relation de Macosko-Miller devant être satisfaite, pour éviter tout risque de gélification par réticulation lors de la réaction de condensation de -OH et/ou de -NH$_2$ avec -NCO.

Ladite réaction peut être réalisée à une température allant de 20 à 65°C.

Les catalyseurs de réaction pouvant être utilisés sont le dibutyldilaurate d'étain, l'octoate d'étain, l'acétate de zinc, le catalyseur préféré étant le dibutyldilaurate d'étain, en quantité variant entre 0 et 3000 ppm.

Un autre objet de l'invention est un autre pré-polymère susceptible d'être obtenu par réaction de modification au moins partielle et dans ce cas, pouvant aller de 1 à 99% des fonctions X ou modification quantitative (100%) d'au moins un pré-polymère portant des fonctions X = NCO libres, tel que défini précédemment, avec au moins un composant réactif comportant des fonctions Y réactives avec lesdites fonctions X, et plus particulièrement avec au moins un monoalcool portant au moins une insaturation éthylénique, de manière à ce que ledit pré-polymère modifié porte des fonctions terminales uréthanes éthyléniquement insaturés. En fait, ladite modification est une réaction qui permet de convertir les fonctions terminales X en terminaisons éthyléniquement insaturées par liaison uréthane.

De préférence, lesdites fonctions X sont converties quantitativement en liaisons terminales uréthanes portant au moins une insaturation éthylénique.

Dans ce but, ledit monoalcool peut être sélectionné parmi les hydroxyalkyl (méth)aciylates, les alcools allyliques, les alcools vinyliques, les hydroxyalkylpoly(méth)acyilates (autrement dit monoalcools multiesters (méth)acryliques), ou les dérivés de ces alcools insaturés, ou les dérivés semi-esters insaturés hydroxylés d'acide dicarboxylique saturé, tel que phtalique, ou insaturé, tel que maléique.

Un autre objet de l'invention est une composition de résine réticulable, de préférence par double voie radicalaire et/ou condensation d'isocyanate, avec une autre fonction réactive avec ledit isocyanate, ladite composition comprenant au moins un pré-polymère, tel que défini selon l'invention, ou obtenu selon le procédé de l'invention. Une telle composition peut être une formulation d'application, telle qu'une composition de moulage, composites, y compris composites allégés tels que les mousses, SMC, BMC, stratifiés, pré-imprégnés, revêtements, mastics, colles, barrier coats, gel coats, revêtements IMC, bétons polyesters, marbres artificiels, ou une composition intermédiaire avant la formulation finale.

Selon un cas particulier de l'invention, ladite composition comprend au moins un pré-polymère susceptible d'être obtenu à partir d'un composant A comprenant une résine de type i) et ii), la rèsine i) choisie parmi au moins un polyester insaturé comme décrit plus haut et la resine ii) choisie parmi au moins un polyester insaturé ou/et au moins un vinyl ester, et qui porte des fonctions hydroxylées. Un exemple de vinyl ester préféré dans ce cas est un di(méth)acrylate de DGEBA, de préférence dilué dans un monomère éthyléniquement insaturé sélectionné parmi les di(méth)acrylates de tripropylène glycol, d'éthylène glycol (EG), de diéthylène glycol (DEG), de néopentyl glycol (NPG), de butyl-éthyl-propanediol (BEPD), de butanediol, ou les multi(méth) acrylates, tels que le tri(méth) acrylate de triméthylolpropane (TMPTA) ou le tétra(méth)acrylate de pentaérythritol. La présence d'un tel vinylester améliore en particulier la stabilité au stockage de ladite composition, tout en évitant les risques de gélification involontaires au stockage, plus particulièrement quand l'indice OH de la résine de départ se situe dans la partie $I_{OH}$ inférieurede la plage.

Selon une autre possibilité, ladite composition réticulable de l'invention comprend au moins un pré-polymère à terminaison X = OH et/ou $NH_2$. Ce type de composition comprend en plus au moins un polyisocyanate de fonctionnalité allant de 2 à 3, et éventuellement d'autres composés polyols ou polyamines ou polyépoxydes réactifs avec ledit polyisocyanate, de manière à ce que le rapport en équivalents r = NCO / (OH + $NH_2$) dans la composition varie de 0,6 à 1,1. Ce type de composition peut également être exempte de tout autre co-réactant avec comme seule présence celle d'au moins un pré-polymère de l'invention.

Selon une autre possibilité, ladite composition comprend au moins un pré-polymère à terminaison X = NCO libre. Dans ce cas, le co-réactant de ce pré-polymère dans cette composition, peut être une résine polyol (ou résine de fonctionnalité amine) insaturée tel qu'un polyester polyol insaturé ou vinyl ester ou un pré-polymère uréthane-polyol, tel que décrit dans le premier concept d'utilisation selon l'invention (X = OH et/ou $NH_2$), et éventuellement d'autres co-réactants saturés parmi les polyols, polyamines ou polyépoxydes.

Une autre possibilité consiste en une composition comprenant au moins les deux types de pré-polymères selon l'invention, l'un étant le pré-polymère à terminaisons X = OH et/ou $NH_2$, et l'autre étant le pré-polymère à terminaisons X = NCO libre. Selon un mode préféré, seuls les deux pré-polymères de l'invention sont les constituants co-réactants uniques de ladite composition réticulable. Dans un tel cas, en plus des avantages cités précédemment, il n'y a plus l'inconvénient lié à la manipulation du polyisocyanate par le formulateur final, dans la mesure où sa manipulation est complètement éliminée, et avec elle les risques liés à l'hygiène, la sécurité et l'environnement.

Une variante de ladite composition peut également comprendre au moins un pré-polymère susceptible d'être obtenu par réaction de modification partielle ou quantitative du pré-polymère à terminaisons X = NCO libres, avec un monoalcool insaturé tel que défini précédemment. Dans ce cas, les fonctions X terminales sont de préférence transformées en insaturations terminales avec des ponts uréthanes, l'utilisation de tels pré-polymères permettant de contrôler et d'améliorer l'efficacité de la réaction de réticulation radicalaire, avec un réseau de réticulation plus contrôlé du fait des insaturations terminales dudit pré-polymère. Dans ce cas, les performances mécaniques en termes de module, d'HDT (tenue à la chaleur) et de résistance à l'eau se trouvent significativement améliorées.

Une telle composition réticulable comprenant au moins un pré-polymère, tel que défini selon l'invention, peut être une composition de moulage, composites y compris composites allégés, tels que mousses, SMC, BMC, stratifiés, pré-imprégnés, mastics, colles, revêtements, barrier coats, gel coats, revêtements IMC, bétons polyesters, marbres artificiels.

Ladite composition peut donc être renforcée avec des fibres de verre et/ou d'autres charges renforçantes et/ou d'autres additifs usuels, bien connus de l'homme du métier, des charges comme le carbonate de calcium, les additifs de rhéologie de type $SiO_2$ ou de type argiles organiques, les anti-mousses, les additifs LSE (Low Styrene Emission), LP (Low Profile), LS (Low Shrink) et les démoulants internes.

Plus particulièrement, la composition réticulable de l'invention peut être une composition de revêtements, et de préférence une composition de gel coats, de barrier coats, ou de revêtements IMC, avec comme avantages particuliers, un meilleur aspect de surface et une meilleure tenue mécanique et à l'eau.

Ces compositions peuvent comprendre au moins un système d'amorçage sélectionné parmi les peroxydes ou hydroperoxydes, systèmes redox basse température et/ou photoamorceurs, bien connus de l'homme du métier, en fonction de l'application visée et du procédé de mise en œuvre choisi.

Un autre objet de l'invention est un procédé de préparation de ladite composition réticulable selon l'invention, ledit procédé comprenant au moins l'étape d'addition par mélange d'au moins un pré-polymère selon l'invention, dans ladite composition réticulable. L'addition est réalisée sous forme diluée dans un monomère éthyléniquement insaturé tel que défini précédemment, addition suivie par mélange/homogénéisation de la composition, avant l'addition éventuelle de fibres de verre.

L'utilisation des pré-polymères de l'invention dans des compositions réticulables telles que des compositions de moulage, composites, composites allégés, y compris mousses, SMC, BMC, stratifiés, préimprégnés, mastics, colles, revêtements, barrier coats, gel coats, revêtements IMC, bétons polyesters, marbres artificiels, et dans la réparation in situ de canalisations enterrées, y compris de conduites (pipes) pétrolières ou de conduites d'eau, peut nécessiter l'usage de divers procédés de mise en œuvre tels que l'application : à la main, au pistolet, par imprégnation, par enroulement filamentaire, par pultrusion, par injection, par compression, par infusion IMC, par coulée, par centrifugation, par RTM et par RIM.

Parmi quelques utilisations plus particulières, on peut citer l'utilisation d'au moins un pré-polymère à terminaisons X = NCO libres, en plus de la préparation d'un autre pré-polymère modifié à terminaisons X transformées en insaturations terminales uréthanes, dans la préparation de mastics autoréticulables en présence d'humidité de l'air à température ambiante (par réaction des fonctions NCO avec l'humidité de l'air).

D'autres utilisations sont la préparation de revêtements, gel coats, barrier coats, mastics, colles, revêtements IMC, bétons polyesters, marbres artificiels, réticulables par voie peroxyde ou hydroperoxyde à basse température, en présence d'au moins un accélérateur de décomposition, ou par chauffage à température plus élevée, ou sous rayonnement en présence de photoamorceur (par exemple sous UV) ou sans photoamorceur (sous rayonnement de faisceaux d'électrons EB). Parmi les applications possibles, on peut citer donc les compositions de moulage, composites, y compris composites allégés, tels que mousses, SMC, BMC, stratifiés, pré-imprégnés, revêtements, mastics, colles, barrier coats, gel coats, revêtements IMC, bétons polyesters, marbres artificiels.

Des applications encore plus particulières concernent les applications pour automobile, peinture marine, pièces mécaniques, panneaux sandwich de camions frigo, protection thermique et mécanique, sanitaires (bacs à douche ou baignoires), l'équipement de protection individuelle, boucliers ou panneaux de protection, casques ou chaussures de protection, canalisations enterrées, y compris de conduites (pipes) pétrolières ou de conduites d'eau, construction/bâtiment, surface (peau) extérieure de qualité cosmétique pour application automobile ou camions de transport.

Un autre objet de l'invention concerne le procédé de mise en œuvre d'une composition selon l'invention. Ladite mise en œuvre peut comprendre au moins une étape d'application ou de mise en œuvre à la main, au pistolet, par imprégnation, par enroulement filamentaire, par pultrusion, par injection, par compression, par infusion IMC, par coulée, par centrifugation, par RTM et par RIM.

Enfin, un dernier objet de l'invention est un article fini obtenu par réticulation d'au moins une composition réticulable définie selon l'invention, sélectionnée parmi les compositions de moulage (pièces moulées), les composites, plus particulièrement composites allégés, comme les mousses, stratifiés, pré-imprégnés, mastics, colles, revêtements, barrier coats, gel coats, revêtements IMC, bétons polyesters, marbres artificiels, panneaux sandwich d'isolation, moyens de protection thermique et mécanique, équipement de protection individuelle (boucliers, casques, chaussures), pâles d'éoliennes, pièces automobile, peintures marines, pièces mécaniques, canalisations enterrées, y compris conduites (pipes) pétrolières ou conduites d'eau.

A titre d'illustration de l'invention, les exemples suivants démontrent sans aucune limitation, les performances des pré-polymères et compositions de résine obtenues.

## I/ Tests et méthodes de caractérisation

1) Teneur en eau

Evaluation selon les normes NFT 20-052 et ISO 760 sur un appareil de titrage automatique Karl Fischer de type Metrohm KF 658.

2) Teneur en volatils

Evaluation par évaporation sous chauffage infrarouge, grâce à un dessiccateur Mettler LP 16 et une balance PM 10, 2 g de résine à analyser sont introduits dans une capsule en aluminium non traité, puis chauffés à 160°C pendant 35 min.

3) Dosage du styrène par Chromatographie en Phase Gazeuse (CPG)

Evaluation par CPG sur un chromatographe HP 5890, avec une colonne capillaire AT-1 Alltech (réf : 13640) et une seringue de 10 microlitres. Conditions analytiques : température du four : 40°C pendant 5 min, puis 5°C/min jusqu'à 220°C, température injecteur : 230°C, température détecteur : 250°C.

4) Indice d'hydroxyle

Evaluation sur un titrimètre Métrohm de référence Titrando 809 avec une unité de dosage Dosino 800 (électrode LiCl saturé dans EtOH et agitateur à hélice Ti Stand 804), couplé à un logiciel Tiamo.

5) Indice d'acide

Evaluation selon la norme ISO 2114 sur un titrimètre Métrohm de référence Titrando 809 avec une unité de dosage Dosino 800 (électrode LiCl saturé dans EtOH et agitateur à hélice Ti Stand 804), couplé à un logiciel Tiamo.

6) Indice d'isocyanate

La détermination de l'indice d'isocyanate est déterminée par réaction de la dibutylamine en excès sur les fonctions isocyanates de la résine, puis dosage en retour de la dibutylamine qui n'a pas réagi sur les fonctions isocyanates par l'acide chlorhydrique.
La quantité de dibutylamine consommée par la résine est déterminée par différence avec un dosage blanc (sans résine), selon :

$$I_{NCO} \text{ (en mg KOH/g)} = [(V_B\text{-}V_E)\text{*}NT\text{*}56,1)]/M,$$

avec :
VE : volume titrant versé pour le dosage de l'échantillon (mL), VB : volume titrant versé pour le dosage du blanc (mL), NT : normalité du titrant (0,1 N), M : masse de l'échantillon (g).

7) Viscosité Brookfield

Evaluation de la viscosité à 25°C sur un viscosimètre Brookfield. Les mesures ont été réalisées sur un viscosimètre Brookfield DV III+, avec un mobile 3, et à une vitesse de 50 tours/minute.

8) Mesures GPC (étalonnage polystyrène)

- Matériels utilisés : système d'alimentation en solvant (THF) : pompe Waters 610, contrôleur 600 E, injecteur automatique Waters 717+, détecteur réfractométrique Waters R 410, fours thermorégulés à 35°C pour les colonnes.
- Colonnes utilisées : jeu de 6 colonnes Waters type Styragel HR de différentes porosités : 10 000 Å (1 colonne), 1 000 Å (1 colonne), 5 500 Å (2 colonnes), 100 Å (1 colonne), 50 Å (1 colonne).
- Conditions de mesure : prise d'échantillon d'environ 180 mg avec dilution dans 20 mL THF, injection de 150 pL avec durée d'analyse : 72 min.

**II/ Matières premières**

A) Matières premières entrant dans la composition des pré-polymères

| Composé | Nature chimique | Nom du produit | Fournisseur |
|---|---|---|---|
| Monoéthylène glycol | - | - | HELMA AG |
| Monopropylène glycol | - | - | DOW |
| Néopentyl glycol | - | - | BASF |
| Dipropylène glycol | - | - | DOW |
| Acide fumarique | - | - | Atochem |
| Acide téréphtalique | - | - | BP |
| Acide isophtalique | - | - | Lonza |

(suite)

| Composé | Nature chimique | Nom du produit | Fournisseur |
|---|---|---|---|
| Anhydride maléique | - | - | Cray Valley |
| Styrène | - | - | Atochem |
| MDI | Diphénylméthanediisocyanate | Desmodur 2460M | BAYER |
| $H_{12}$MDI | Dicyclohexylméthanediisocyanate | Desmodur W | BAYER |
| IPDI | Isophorone diisocyanate | Desmodur I | BAYER |
| Vinyl ester (epoxy MA) | - | CN 151 | Sartomer |
| Monomère MFA | - | SR 206 | Sartomer |
| HEMA | Hydroxyéthylméthacrylate | HEMA | Degussa |
| Tosyl isocyanate | - | Additif Ti | Borchers |
| BHT | Ditertio b utylparacré sol | Lowinox BHT | Great Lakes |
| Naphtoquinone | - | - | VWR |
| PTZ | Phénothiazine | - | Avecia |

B) Matières premières entrant dans les formulations d'application

| Constituant | Fonction | Nature chimique | Fournisseur |
|---|---|---|---|
| MDI | Agent de maturation chimique | Diphénylméthanediisocyanate de fonctionnalité NCO > 2 Grade Desmodur VH20 | BAYER |
| PQB | Stabilisant | Parabenzoquinone | Eastman |
| TBPEH LAM$_2$ | Initiateur radicalaire | Ter-butylperoxy-2-éthvlhexanoate | Degussa |
| Carbonate de calcium | Charge | - | Omya |
| Stéarate de zinc | Démoulant interne | - | CECA |
| Fibres de verre P204 4800 tex 25 mm | Charge de renfort | - | Vetrotex |
| Byk 515 | Anti-mousse | - | BYK Chemie |
| Luperox MC | Initiateur radicalaire | Ter-amyl-2-éthylhexylmonoperoxycarbonate | Arkema |
| Pâte pigmentaire standard | Colorant | - | Cray Valley |

**III/ Synthèse des résines de départ et des pré-polymères selon l'invention**

Les caractéristiques physico-chimiques de ces résines et pré-polymères sont présentées dans le tableau la, leurs propriétés mécaniques propres dans le tableau 1b, et leur tenue à l'eau dans le tableau 1c.

Exemple 1 : synthèse de la résine de départ A'

Dans un montage de synthèse classique, on introduit 170 g de monoéthylène glycol (2,74 mol), 275 g de néopentylglycol (2,64 mol), 285 g 5 d'acide fumarique (2,45 mol) et 270 g d'acide téréphtalique (1,62 mol). On chauffe à 220°C, et lorsqu'on on atteint cette température on poursuit la réaction en isotherme jusqu'à un IA < 3 mg KOH/g. On dilue ensuite avec 33% de styrène stabilisé.

Exemple 2 : synthèse de la résine de départ B'

Dans un montage comme celui de l'exemple 1, on introduit 104,6 g de monopropylène glycol (1,37 mol), 424,6 g de dipropylèneglycol (3,17 mol), 318,6 g d'anhydride maléique (3,25 mol) et 152,2 g d'acide isophtalique (0,92 mol). On chauffe à 220°C, et une fois la température atteinte on poursuit la réaction en isotherme jusqu'à un IA < 10 mg KOH/g. On dilue ensuite avec 31% de styrène stabilisé.

Exemple 3 : synthèse du pré-polymère A (éq. NCO / éq. OH = 0,37)

Dans un montage comme celui de l'exemple 1, on introduit 819 g de résine B' ($I_{OH}$ = 49,8 mg KOH/g et teneur en eau < 700 ppm) à 25°C. On chauffe à 40°C, et on introduit 33,6 g de MDI de fonctionnalité isocyanate égale à 2 en deux aliquots, en laissant évoluer l'exothermie de la réaction et en contrôlant la température du milieu réactionnel pour qu'elle ne dépasse pas 55°C. Après l'exotherme, on maintient la température du milieu à 40°C et on poursuit la réaction jusqu'au critère d'arrêt de la réaction : $I_{NCO}$ compris entre 4 à 6 mg KOH/g. On procède alors, après avoir fait redescendre le milieu réactionnel à 25°C, à un ajout de 147,4 g d'un mélange de CN 151/SR 206 (70/30 en poids), puis on ajuste à une viscosité de l'ordre de 20 Poises avec du styrène, et on obtient finalement un indice NCO de 2,9 mg KOH/g.

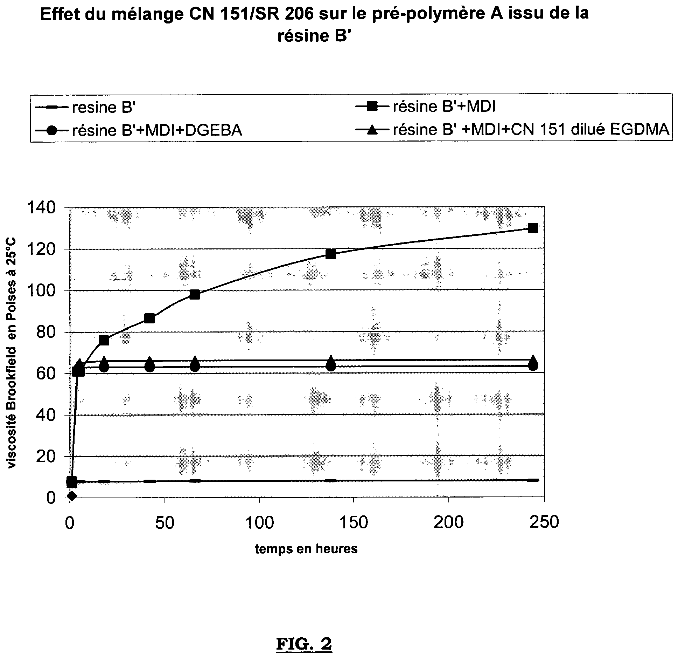

La figure 2 montre l'effet d'amélioration de la stabilité au stockage dudit pré-polymère par la présence du vinyl ester cité.

Exemple 4 : synthèse du pré-polymère B (éq. NCO / éq. OH = 0,3)

Dans un montage comme celui de l'exemple 1, on introduit 863,5 g de résine A' ($I_{OH}$ = 98,6 mg KOH/g et teneur en eau < 500 ppm) à 25°C. On introduit alors 28,2 g d'HEMA, puis on élève la température du milieu à 40°C et on introduit 58,3 g de MDI de fonctionnalité isocyanate égale à 2 en deux aliquots en laissant évoluer l'exothermie de la réaction et en contrôlant la température du milieu réactionnel pour éviter qu'elle ne dépasse 55°C.
Après l'exotherme, on maintient la température du milieu à 40°C et on suit l'évolution de la réaction en indice d'isocyanate jusqu'au critère d'arrêt de la réaction : $I_{NCO}$ < 6 mg KOH/ g.
On procède alors, après avoir fait redescendre le milieu réactionnel à 25°C, à un ajout de 50 g de styrène pour faire revenir la viscosité du prépolymère à 20 Poises.

Exemple 5 : synthèse du pré-polymère C (éq. NCO / éq. OH = 0,4)

Dans un montage comme celui de l'exemple 1, on introduit 802 g de résine A' ($I_{OH}$ = 98,6 mg KOH/g et teneur en eau < 500 ppm) à 25°C. On introduit alors 26 g d'HEMA, puis on élève la température du milieu à 40°C et on introduit 81,2 g de MDI de fonctionnalité isocyanate égale à 2 en deux aliquots en laissant évoluer l'exothermie de la réaction et en contrôlant la température du milieu réactionnel pour éviter qu'elle ne dépasse 55°C. Après l'exotherme, on poursuit la réaction jusqu'au critère d'arrêt, comme dans l'exemple 4.
Après refroidissement à 25°C, on ajoute 90,3 g de styrène pour ajuster la viscosité à 20 Poises, et à un ajout d'environ 500 ppm de naphtoquinone pour assurer la stabilité du produit au stockage.

Exemple 6 : synthèse du pré-polymère D (éq. NCO / éq. OH = 0,4)

Dans un montage comme celui de l'exemple 1, on introduit 805 g de résine A' ($I_{OH}$ = 95,2 mg KOH/g et teneur en eau < 500 ppm) à 25°C. On introduit alors 28,2 g d'HEMA, puis on élève la température du milieu à 40°C et on introduit 83 g de H12MDI de fonctionnalité isocyanate égale à 2 en deux aliquots en présence de 500 ppm de DBTDL, en laissant évoluer l'exothermie de la réaction et en contrôlant la température du milieu réactionnel pour ne pas qu'elle dépasse 55°C. Après l'exotherme, on poursuit la réaction jusqu'au critère d'arrêt, comme dans l'exemple 4.
Après refroidissement à 25°C, on ajoute 84 g de styrène pour ajuster la viscosité du pré-polymère vers 20 Poises, avec stabilisation comme pour l'exemple 5.

Exemple 7 : synthèse du pré-polymère E (éq. NCO / éq. OH = 0,4)

Dans un montage comme celui de l'exemple 1, on introduit 816,3 g de résine A' ($I_{OH}$ = 95,2 mg KOH/g et teneur en eau < 500 ppm) à 25°C. On introduit alors 28,6 g d'HEMA, puis on élève la température du milieu à 40°C et on introduit 71,2 g dIPDI de fonctionnalité isocyanate égale à 2 en deux aliquots, en laissant évoluer l'exothermie de la réaction et en contrôlant la température du milieu réactionnel pour qu'elle ne dépasse pas 55°C. Après l'exotherme, on poursuit la réaction jusqu'au critère d'arrêt, comme dans l'exemple 4.
Après refroidissement à 25°C, on ajoute 84 g de styrène pour ajuster la viscosité du pré-polymère vers 15 Poises, et on stabilise avec 500 ppm de naphtoquinone pour assurer la stabilité du produit au stockage.

Exemple 8 : synthèse du pré-polymère F (éq. NCO / éq. OH = 2,36)

Dans un montage de synthèse classique, on introduit 215,8 g de styrène (teneur en eau < 200 ppm) à 25°C, puis 4,3 g de tosyl isocyanate. On introduit alors 200 ppm de BHT et 250 ppm de PTZ, puis 267 g de MDI, en laissant évoluer la température du milieu réactionnel jusqu'à 50°C. On ajoute ensuite en continu 517,2 g de résine A' ($I_{OH}$ = 98,6 mg KOH/g et teneur en eau < 500 ppm), sans dépasser la température de 65°C. On suit l'évolution de la réaction en indice d'isocyanate jusqu'au critère d'arrêt de la réaction : $I_{NCO}$ situé entre 64 et 66 mg KOH/g. On refroidit ensuite le milieu à 25°C. Le produit est ensuite conservé sous azote (à l'abri de l'humidité).

Exemple 9 : synthèse du pré-polymère G (éq. NCO / éq. OH = 2,36)

Dans un montage de synthèse classique, on introduit 215,8 g de styrène (teneur en eau < 200 ppm) à 25°C, puis 5 g de tosyl isocyanate. On introduit alors 200 ppm de BHT et 250 ppm de PTZ, puis 269,9 g de H12MDI et 2000 ppm de DBTDL, en laissant évoluer la température du milieu réactionnel jusqu'à 50°C. On ajoute en continu 514,3 g de résine A' ($I_{OH}$ = 95,2 mg KOH/g et teneur en eau < 500 ppm), sans dépasser la température de 65°C. On suit l'évolution de la réaction en indice d'isocyanate jusqu'au critère d'arrêt de la réaction : $I_{NCO}$ situé entre 53 et 56 mg KOH/g. On refroidit ensuite le milieu à 25°C. Le produit est ensuite conservé sous azote (à l'abri de l'humidité).

Exemple 10 : synthèse du pré-polymère H (éq. NCO / éq. OH = 2,36)

Dans un montage de synthèse classique, on introduit 215,8 g de styrène (teneur en eau < 200 ppm) à 25°C, puis 5 g de tosyl isocyanate. On introduit alors 200 ppm de BHT et 250 ppm de PTZ, puis 241 g dIPDI et 1000 ppm de DBTDL, et en laissant évoluer la température du milieu réactionnel jusqu'à 50°C. On ajoute en continu 542,9 g de résine A' ($I_{OH}$ = 95,2 mg KOH/g et teneur en eau < 500 ppm), sans dépasser la température de 65°C. On suit l'évolution de la réaction en indice d'isocyanate jusqu'au critère d'arrêt de la réaction : $I_{NCO}$ situé entre 66 et 69 mg KOH/g. On refroidit ensuite le milieu à 25°C. Le produit est ensuite conservé sous azote.

Exemple 11 : synthèse du pré-polymère I, qui est le pré-polymère H modifié HEMA

Dans un montage de synthèse classique, on introduit 862 g du prépolymère H ($I_{NCO}$ = 68 mg KOH/g) et 2000 ppm de DBTDL, et en laissant évoluer la température du milieu réactionnel jusqu'à 50°C. On ajoute en 2 aliquots 135,8 g d'HEMA ($I_{OH}$ = 431,53 mg KOH/g), sans dépasser la température de 65°C. On suit l'évolution de la réaction en indice d'isocyanate jusqu'au critère d'arrêt de la réaction : $I_{NCO}$ 2 mg KOH/g.

Exemple 12 : synthèse du pré-polymère J, qui est le pré-polymère F modifié par HEMA

Dans un montage de synthèse classique, on introduit 862 g du prépolymère F ($I_{NCO}$ = 65 mg KOH/g), et en laissant évoluer la température du milieu réactionnel jusqu'à 50°C. On ajoute en deux aliquots 129,6 g d'HEMA ($I_{OH}$ = 431,53 mg KOH/g), sans dépasser la température de 65°C.
On suit l'évolution de la réaction en indice d'isocyanate jusqu'au critère d'arrêt de la réaction : $I_{NCO}$ 5 mg KOH/g.

Exemple 13 : synthèse du pré-polymère K

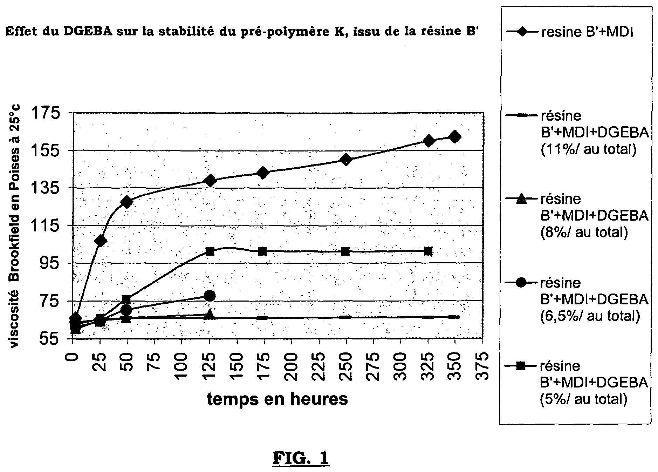

Dans un montage classique de synthèse, on introduit à 25°C, 854 g de résine B' ($I_{OH}$ = 49,8 mg KOH/g et teneur en eau < 700 ppm). On chauffe à 40°C et on introduit 35,1 g de MDI de fonctionnalité isocyanate égale à 2, en deux aliquots en laissant l'exothermie de la réaction évoluer et en contrôlant la température du milieu réactionnel pour ne pas dépasser 55°C. Après l'exotherme, on maintient la température à 40°C en poursuivant la réaction jusqu'à $I_{NCO}$ entre 4 et 6 mg KOH/g (critère d'arrêt). Après refroidissement à 25°C, on ajoute 111 g de DGEBA et on atteint un $I_{NCO}$ final de 3,4 mg KOH/g. L'effet de cette addition sur la stabilité du pré-polymère est présenté en figure 1, en annexe.

Tableau 1a : Caractéristiques physico-chimiques des résines de départ et des pré-polymères selon l'invention

| Caractéristiques | Références des résines de départ et des pré-polymères selon l'invention | | | | | | | | | | | | |
|---|---|---|---|---|---|---|---|---|---|---|---|---|---|
| | A' | B' | A | B | C | D | E | F | G | H | I | J | K |
| Teneur en eau (ppm) | 460 | 540 | 810 | 544 | 600 | 380 | 460 | 250 | 175 | 140 | 174 | 300 | 700 |
| Teneur en styrène (%) | 33 | 31,1 | 31,2 | 31,2 | 32,4 | 33 | 35 | 35 | 35 | 43 | 39,5 | 32,4 | 25 |
| Indice d'hydroxyle (mg KOH/g) | 98,6 | 49,8 | 44,5 | 68,9 | 52,9 | 52,4 | 64 | 1 | 1,1 | 2,2 | 2,5 | 2,1 | 28,5 |
| Indice d'acide (mg KOH/g) | 1,4 | 6 | 5,6 | 1,2 | 1,8 | 2 | 1,5 | 1 | 1 | 1,6 | 1,2 | 1 | 6,2 |
| Indice d'isocyanate (mg KOH/g) | | | 2,9 | 2,6 | 4,8 | 4,5 | 3,1 | 65 | 55 | 68 | 1 | 4,2 | 3,4 |
| Viscosité (Poises) | 7,3 | 8,6 | 22,7 | 20,6 | 20,1 | 21,2 | 14 | 15 | 23 | 3,4 | 7,2 | 62,4 | 63 |
| GPC (étalonnage polystyrène) Mn (g/mol) Mw (g/mol) I Mn calculée via Ix | 1489 4034 2,71 752 | 2342 13503 5,77 1390 | 2300 39180 17 1534 | 1995 5940 2,98 1103 | 2130 7071 3,32 | 2325 11490 4,94 | 2160 7290 3,38 | 2555 10922 4,3 1105 | - - - 1303 | 2075 6535 3,15 904 | 1780 6500 3,65 | 1780 10220 5,74 | - - - |

**Tableau 1b : Caractéristiques mécaniques des résines de départ et des pré-polymères selon l'invention**

| Caractéristiques | Références des résines de départ et des pré-polymères selon l'invention | | | | | | | | | |
|---|---|---|---|---|---|---|---|---|---|---|
| | A' | B' | A | B | C | E | F* | I | J | K |
| FLEXION | | | | | | | | | | |
| Module (MPa) | 3250 | 3225 | 3445 | 3550 | 3550 | 3500 | 3800 | 3400 | 3350 | 3215 |
| Contrainte (MPa) | 115 | 102 | 110 | 125 | 135 | 110 | 135 | 115 | 130 | 110 |
| Flèche (mm) | 7,45 | 7,5 | 6,5 | 7,8 | 8,4 | 5,6 | 7,7 | 7 | 9,3 | 7,7 |
| HDT (°C) | 83,5 | 90 | 104 | 95 | 100 | 97 | 117 | 120 | 123 | 70 |
| Choc Charpy (KJ/m$^2$) | 6,8 | 9 | - | - | 11 | 9,8 | - | 13.1 | 15,8 | - |
| F*: correspond à un mélange de pré-polymères C et F dans un rapport en poids de 2/1 | | | | | | | | | | |

Mode opératoire de préparation des plaques éprouvettes:

Après dilution à 40% de styrène et réticulation sous forme de plaque de résine pure avec 0,15% d'octoate de Co à 6% et 10 1,2% de peroxyde de méthyl éthyl cétone, à 50% dans le diisobutylphtalate et après post-cuisson selon : 16 h à 80°C, suivi de 2 h à 120°C, on évalue les performances mécaniques (flexion 3 points suivant ISO 178 et résistance à l'impact au choc Charpy suivant ISO 179) et thermomécaniques (HDT selon ISO 75-2). Voir résultats dans le tableau 1b.

Tableau 1c : Tenue à l'hydrolyse des résines et des pré-polymères selon l'invention

Les résultats présentés ci-dessous correspondent à ceux obtenus en plaçant en immersion pendant 100 heures à 100°C des plaquettes de résine ou de pré-polymères réalisés dans les conditions précédemment évoquées pour la réalisation des tests mécaniques.

Après cette immersion, on mesure alors la prise en masse de la plaquette due à l'absorption d'eau.

| Références de résines commerciales comparées, de la résine de départ A' et des pré-polymères selon l'invention | % en masse d'eau absorbée après 100 heures à 100°C |
|---|---|
| Norsodyne® S05820 (résine bisphénol) | 1,90 |
| Norsodyne® G703 (résine iso) | 1,28 |
| A' | 2,82 |
| C | 1,68 |
| E | 1,84 |
| I | 1,52 |
| J | 1,07 |

Les pré-polymères selon l'invention ont une tenue à l'eau nettement meilleure par rapport à la résine de départ, qui présente une faible tenue à l'eau, et ils ont au moins une aussi bonne tenue voire, une meilleure tenue par rapport aux résines commerciales Norsodyne® S05820 (résine bisphénol), et Norsodyne® G703 (résine iso) faisant référence dans notre gamme pour leur bonne tenue à l'hydrolyse.

Ces meilleures performances sont surtout valables lorsque le pré-polymère uréthane-isocyanate est fonctionnalisé par des terminaisons (méth)acrylates qui permettent de renforcer encore plus la résistance à l'hydrolyse, en particulier pour des applications revêtements, tels que gels coats ou barrier coats.

## IV/ Evaluation des formulations d'application

Les évaluations d'application des pré-polymères selon l'invention sont d'abord réalisées dans des formulations sans fibres ni charges (voir les tableaux de résultats 2a et 2b), et ensuite sur des formulations BMC (voir les tableaux de résultats 3a et 4a) et SMC (voir les tableaux de résultats 3b et 4b).

Les tableaux 2a, 3a et 3b présentent les compositions des différentes formulations.

Le tableau 2b présente l'évolution de l'exothermie et de la viscosité en fonction du temps de réaction.

Les tableaux 4a et 4b présentent respectivement les performances mécaniques des formulations BMC (du tableau 3a) et SMC (du tableau 3b).

Le tableau 5 compare les performances mécaniques du pré-polymère B par rapport à la résine de départ dans des formulations SMC hybrides préparées dans des conditions comparables.

**Tableau 2a** : Formulations sans charges ni fibres testées (compositions en parties en poids)

| | Références des formulations | | |
|---|---|---|---|
| | ① (comparatif) | ② | ③ |
| **Résine de départ A'** | 100 | - | - |
| **Pré-polymère C** | - | 100 | 100 |
| **Pré-polymère F** | - | - | 54,5 |
| **MDI (VH20)** | 20,36 | 11 | 0 |
| **NCO/OH formulation** | 0,67 | 0,67 | 0,67* |
| **DBTDL** | qq gouttes | qq gouttes | qq gouttes |
| * NCO issu du pré-polymère F | | | |

**Tableau 2b** : Evolution comparative de l'exothermie et de la viscosité dans le temps pour les formulations ① (comparatif), ② et ③ (formulations du tableau 2 a)

| | Références des formulations | | |
|---|---|---|---|
| | ① (comparatif) | ② | ③ |
| **EXOTHERMIE** | | | |
| **Tmax atteinte [°C]** | 57 | 37 | 30 |
| **Temps pour atteindre cette Tmax (min)** | 35 | 60 | 90 |
| **VISCOSITE (en Poises)** | | | |
| **après 1 heure** | 396 | 135 | 31 |
| **après 2 heures** | 631 | 290 | 46 |
| **après 3 heures** | 42000 | 710 | 70 |
| **après 5 heures** | 120000 | 1240 | 100 |
| **après 7 heures** | 30000 | 1770 | 127 |
| **après 24 heures** | Gel physique | 2303 | 303 |
| **après 96 heures** | Gel physique | Gel physique | Gel physique |

**Tableau 3a** : Formulations BMC testées (compositions en parties en poids)

| | Références des formulations BMC | | |
|---|---|---|---|
| | ① (comparatif) | ② | ③ |
| **Pré-polymère A** | - | 100 | - |
| **Pré-polymère C** | - | - | 100 |
| **Norsodyne M0070C** | 100 | - | - |
| **MDI (VH20)** | 0 | 9,2 | 11 |

(suite)

| | Références des formulations BMC | | |
|---|---|---|---|
| | ① (comparatif) | ② | ③ |
| PBQ | 0,02 | 0,02 | 0,02 |
| TBPEH LAM$_2$ | 1,3 | 1,3 | 1,3 |
| Carbonate de calcium | 80 | 80 | 80 |
| Stéarate de zinc | 3 | 3 | 3 |
| Total hors fibres | 184,32 | 193,5 | 195,3 |
| Taux de fibres (%) | 45 | 45 | 45 |
| NCO/OH formulation | 0 | 0,67 | 0,67 |

**Tableau 3b** : Formulations SMC testées (compositions en parties en poids)

| | Références des formulations SMC | | | | | | |
|---|---|---|---|---|---|---|---|
| | ① (comparatif) | ② | ③ | ④ | ⑤ | ⑥ (comparatif) | ⑦ |
| Résine de départ A' | - | - | - | - | - | 100 | - |
| Pré-polymère A | - | 100 | - | - | - | - | - |
| Pré-polymère B | - | - | 100 | - | - | - | 100 |
| Pré-polymère C | - | - | - | 100 | 100 | - | - |
| Pré-polymère F | - | - | - | - | 54,5 | - | - |
| Norsodyne M0070C | 100 | - | - | - | - | - | - |
| MDI (VH20) | 0 | 9.2 | 14,3 | 11 | 0 | 23,4 | 16,4 |
| Byk 515 | 0,35 | 0,35 | 0,35 | 0,35 | 0,35 | 0,35 | 0,35 |
| Luperox MC | 1,5 | 1,5 | 1,5 | 1,5 | 1,5 | 1,5 | 1,5 |
| Pâte pigmentaire | 2 | 2 | 2 | 2 | 2 | 2 | 2 |
| Carbonate de calcium | 50 | 50 | 50 | 50 | 50 | 50 | 50 |
| Stéarate de zinc | 3 | 3 | 3 | 3 | 3 | 3 | 3 |
| Total hors fibres | 156,85 | 166,05 | 171,15 | 167,85 | 211,35 | 180,25 | 173,25 |
| Taux de fibres (%) | 55 | 55 | 55 | 55 | 55 | 55 | 55 |
| NCO/OH formulation | 0 | 0,67 | 0,67 | 0,67 | 0,67 | 0,77 | 0,77 |
| * formulation épaissie avec magnésie MK 35NV (3,5% / M0070C) | | | | | | | |

**Tableau 4a** : Résultats comparatifs d'évaluation des formulations BMC

| | Références des formulations BMC | | |
|---|---|---|---|
| | ① (comparatif) | ② | ③ |
| NCO/OH formulation | 0 | 0,67 | 0,67 |
| FLEXION | | | |
| Module (MPa) | 9500 | 13052 | 13300 |
| Contrainte (MPa) | 95 | 145 | 180 |

(suite)

| FLEXION | | | |
|---|---|---|---|
| Flèche (mm) | 2,65 | 2,60 | 3,3 |
| Choc Charpy (KJ/m$^3$) | 33 | 34 | 36 |

**Tableau 4b** : Résultats comparatifs d'évaluation des formulations SMC

| | Références des formulations SMC | | | | |
|---|---|---|---|---|---|
| Caractéristiques et performances mécaniques | ① (comparatif) | ② | ③ | ④ | ⑤ |
| NCO/OH formulation | 0 | 0,67 | 0,67 | 0,67 | 0,67 |
| FLEXION | | | | | |
| Module (MPa) | 13535 | 14810 | 16475 | 17900 | 18000 |
| Contrainte (MPa) | 325 | 330 | 330 | 370 | 399 |
| Flèche (mm) | 4,2 | 4,2 | 3,1 | 4,2 | 4,6 |
| Choc Charpy (KJ/ m$^2$) | 111 | 120 | 119 | 106 | 104 |

**Tableau 5** : Résultats comparatifs d'évaluation des formulations SMC 6 et 7

| | Références des formulations SMC | |
|---|---|---|
| Caractéristiques et performances mécaniques | ⑥ (comparatif) | ⑦ |
| NCO/OH | 0,77 | 0,77 |
| FLEXION | | |
| Module (MPa) | 15000 | 15020 |
| Contrainte (MPa) | 345 | 360 |
| Flèche (mm) | 4,5 | 4,9 |
| Choc Charpy (KJ/m$^2$) | 155 | 149 |

**Revendications**

1. Pré-polymère éthyléniquement insaturé comportant au moins une terminaison X réactive par condensation, choisie parmi les groupements hydroxy et/ ou aminé ou isocyanate libre, et éventuellement une terminaison X' à insaturation éthylénique, ledit pré-polymère ayant une masse moyenne en nombre Mn (mesurée par GPC avec étalons polystyrènes) allant de 1000 à 5000, de préférence de 1200 à 4500 et un indice X exprimé en mg KOH/ g, allant de 30 à 150, de préférence de 35 à 120, avec ledit pré-polymère étant le produit de réaction des composants A et B suivants :

   A) un premier composant A comprenant le mélange suivant :

   i) au moins une première résine éthyléniquement insaturée portant des terminaisons réactives hydroxy et/ ou aminé, choisie parmi les polyesters insaturés ayant un indice OH (mesuré sur résine solide non diluée) de 70 à 170 mg KOH /g et un indice d'acide (mesuré sur résine à l'état solide non dilué) inférieur à 10 mg KOH/ g, les dits polyesters insaturés étant à bas d'un composant acide comprenant au moins l'acide et/ou anhydride maléique et/ou l'acide fumarique avec un acide et/ou anhydride aromatique dans un rapport molaire maléique/aromatique allant de 0,6/0,4 à 0,4/0,6, ladite résine étant diluée dans au moins un monomère éthyléniquement insaturé copolymérisable avec l'insaturation éthylénique de ladite résine,
   ii) éventuellement, en présence d'au moins une deuxième résine différente de la résine i), choisie parmi :

   - les résines hydroxylées éthyléniquement insaturées, et de préférence parmi les polyesters insaturés, les polyesteramides insaturés, les polyuréthanesters insaturés ou les vinyl esters, en dilution dans au moins un monomère éthyléniquement insaturé, et/ ou

- les résines saturées hydroxylées et/ ou aminées, en dilution dans au moins un monomère éthyléniquement insaturé, et/ ou

iii) éventuellement, au moins une troisième résine saturée réactive, choisie parmi les polyéthers polyols ou polyesters polyols ou polyamines ou polyépoxydes, de fonctionnalité 2 ou 3, et de préférence de fonctionnalité 2, et de masse moléculaire Mn inférieure à 400 g/ mol, et

iv) en option, au moins un monoalcool insaturé, lié à la présence éventuelle de ladite terminaison éthylénique X', jusqu'à 30% en équivalents du total OH + NH$_2$, et de préférence inférieure à 20% en équivalents du total OH + NH$_2$ provenant de i) + ii) + iii) + iv), avec la teneur en eau dudit composant A ne depassant pas 1000 ppm,

B) un deuxième composant B comprenant au moins un polyisocyanate de fonctionnalité égale ou supérieure à 2, et pouvant aller jusqu'à 3, et de préférence de fonctionnalité 2, et

avec dans le cas où la fonctionnalité est supérieure à 2, soit pour le composant A, soit pour le composant B, obtention desdits pré-polymères dans des conditions telles que les proportions de A et B, et la fonctionnalité moyenne du mélange réactionnel A et B, satisfont la relation de Macosko-Miller, afin d'éviter toute gélification par réticulation, avec par fonctionalité X choisie les conditions suivantes :

- pour X = OH et/ ou aminé, un rapport en équivalents r = NCO / (OH + NH$_2$) allant de 0,01 à 0,6, de préférence de 0,2 à 0,5 et avec ledit composant B étant additionné, de préférence progressivement, dans ledit composant A, et

- pour X = NCO libre, un rapport en équivalents r = NCO / (OH + NH$_2$) allant de 1,2 à 3, de préférence de 1,5 à 2,5 et avec ledit composant A étant additionné, de préférence progressivement, dans ledit composant B.

2. Pré-polymère selon la revendication 1 **caractérisé en ce que** la masse équivalente par insaturation éthylénique du squelette dudit pré-polymère varie de 150 à 2000, de préférence de 170 à 1500 g/mol.

3. Pré-polymère selon la revendication 1 ou 2 **caractérisé en ce que** ledit pré-polymère comprend ou est composé d'un produit de formule générale suivante :

$$R\text{-}(X)_{n-m}X'_m$$

avec: n allant de 1,5 à 3, et de préférence de 1,5 à 2,5, et
m allant de 0 à 0,5, et de préférence de 0 à 0,3 et
R étant le radical global résultant de la réaction de A avec B, qui porte lesdites terminaisons X, et éventuellement X', et
avec X = OH et/ ou aminé ou NCO libre, et
X' = insaturation éthylénique, pouvant être (méth)acrylique, vinylique ou allylique.

4. Pré-polymère selon l'une des revendications 1 à 3 **caractérisé en ce que** ledit monomère de dilution porte au moins une fonction éthyléniquement insaturée, et que ledit monomère est choisi parmi les monomères vinyliques et/ ou (méth)acryliques et/ ou allyliques.

5. Pré-polymère selon l'une des revendications 1 à 4 **caractérisé en ce que** ladite résine i) a une masse équivalente par insaturation allant de 140 à 2000, et de préférence de 140 à 1250 g/mol.

6. Pré-polymère selon l'une des revendications 1 à 5 **caractérisé en ce que** ledit polyisocyanate est sélectionné parmi le MDI, IPDI, H12MDI, TDI, HDI, triisocyanate d'isocyanurate du HDI, isocyanates dérivés d'urétidione, d'allophanate et de biuret des diisocyanates précédents.

7. Pré-polymère selon l'une des revendications 1 à 6 **caractérisé en ce que** la fonction réactive X est hydroxy et/ ou aminé, et que le rapport éq. NCO / éq. (OH + NH$_2$) varie de 0,01 à 0,6.

8. Pré-polymère selon l'une des revendications 1 à 6 **caractérisé en ce que** la fonction réactive X est un isocyanate libre et que ledit rapport en équivalents NCO / (OH + NH$_2$) varie de 1,2 à 3, et de préférence de 1,5 à 2,5.

**9.** Pré-polymère selon la revendication 8 **caractérisé en ce que** le stabilisant utilisé est une combinaison BHT + PTZ en quantité allant de 20 à 1000 ppm, et de préférence de 60 à 700 ppm.

**10.** Procédé de préparation du pré-polymère selon l'une des revendications 1 à 9 **caractérisé en ce qu'**il comprend les étapes successives suivantes en fonction de la fonctionnalité X:

- pour X = OH et/ ou $NH_2$:
- chargement en pied du réacteur du composant A, tel que défini précédemment, avec un contrôle de la teneur en eau pour ne pas dépasser 1000 ppm, et de préférence inférieur à 600 ppm,
- addition, de préférence progressive, du composant B dans ledit composant A, de manière à avoir un excès de OH + NH2 correspondant à un rapport en équivalents r = NCO / (OH + $NH_2$) variant de 0,01 à 0,6, et de préférence de 0,2 à 0,5, et en option ou si nécessaire, en présence d'un catalyseur de la réaction des fonctions OH avec les fonctions NCO,
- réaction jusqu'à disparition quasi complète des groupements NCO, correspondant ici à un indice (à l'état dilué) de NCO équivalent à < 6 mg KOH/g, dans des conditions d'absence de tout risque de gélification par réticulation, comme défini selon la revendication 1,
- éventuellement, addition d'un stabilisant,
- pour X = NCO libre :
- chargement en pied du réacteur dudit composant B comprenant ledit polyisocyanate en présence d'au moins un monomère éthyléniquement insaturé tel que défini précédemment, monomères dont on aura contrôlé au préalable, avant l'addition de l'isocyanate, la teneur en eau, de manière à ne pas dépasser 10 ppm, si nécessaire par réaction de consommation avec un monoisocyanate, tel que le tosylisocyanate,
- contrôle de la teneur en eau du composant A, de manière à ne pas dépasser 1000 ppm, et de préférence 500 ppm,
- si nécessaire, réduction de la teneur en eau du composant A, par réaction de consommation avec un monoisocyanate,
- addition, de préférence progressive, du composant A sur ledit composant B comprenant ledit polyisocyanate en excès en pied du réacteur, avec un rapport en équivalents r = NCO / (OH + $NH_2$) variant de 1,2 à 3, et de préférence de 1,5 à 2,5,
- réaction jusqu'à disparition quasi complète des groupements OH (et groupements équivalents), ce qui correspond ici à un indice (à l'état dilué) équivalent à < 3 mg KOH /g, dans des conditions d'absence de tout risque de gélification par réticulation comme défini selon la revendication 1 , et
- en option, à l'étape de réaction, présence d'un catalyseur de la réaction des fonctions OH avec les fonctions NCO, et
- en option, stabilisation par addition d'un stabilisant.

**11.** Pré-polymère susceptible d'être obtenu par réaction d'au moins un pré-polymère selon l'une des revendications 8 ou 9, avec un composant réactif comportant des fonctions Y réactives avec lesdites fonctions X.

**12.** Pré-polymère selon la revendication 11 **caractérisé en ce qu'**il est obtenu par réaction du pré-polymère selon l'une des revendications 8 ou 9, avec au moins un monoalcool portant au moins une insaturation éthylénique.

**13.** Pré-polymère selon la revendication 12 **caractérisé en ce que** lesdites fonctions X sont converties quantitativement en liaisons terminales uréthanes portant au moins une insaturation éthylénique.

**14.** Composition de résine réticulable comprenant au moins un prépolymère selon l'une des revendications 1 à 9 ou 11 à 13, ou obtenue par le procédé selon la revendication 10.

**15.** Composition selon la revendication 14 **caractérisée en ce qu'**elle comprend au moins un pré-polymère selon la revendication 7.

**16.** Composition selon la revendication 14 **caractérisée en ce qu'**elle comprend au moins un pré-polymère selon l'une des revendications 8 ou 9.

**17.** Composition selon la revendication 15 **caractérisée en ce qu'**elle comprend en plus au moins un polyisocyanate de fonctionnalité allant de 2 à 3, et éventuellement d'autres composés polyols ou polyamines ou polyépoxydes réactifs avec ledit polyisocyanate, avec un rapport éq. NCO / éq. (OH + $NH_2$) variant de 0,6 à 1, 1.

18. Composition selon l'une des revendications 14 à 16 **caractérisée en ce qu'**elle est sans présence d'autres co-réactants à part ledit prépolymère.

19. Composition selon l'une des revendications 14 à 16 **caractérisée en ce qu'**elle comprend au moins deux pré-polymères : l'un selon la revendication 7, et l'autre selon l'une des revendications 8 ou 9.

20. Composition selon la revendication 14 **caractérisée en ce qu'**elle comprend au moins un pré-polymère selon l'une des revendications 11 à 13.

21. Composition selon l'une des revendications 14 à 20 **caractérisée en ce qu'**elle est une composition de moulage, composites, composites allégés, y compris mousses, SMC, BMC, stratifiés, pré-imprégnés, mastics, colles, revêtements, barrier coats, gel coats, revêtements IMC, bétons polyesters, marbres artificiels.

22. Composition selon la revendication 20 **caractérisée en ce qu'**il s'agit d'une composition de revêtement, et de préférence une composition de gel coat, de barrier coat ou de revêtement IMC.

23. Procédé de préparation d'une composition réticulable telle que définie selon l'une de revendications 14 à 22 **caractérisé en ce qu'**il comprend au moins l'étape d'addition par mélange d'au moins un pré-polymère selon l'une des revendications 1 à 9 et 11 à 13 dans ladite composition réticulable.

24. Utilisation d'au moins un pré-polymère selon l'une des revendications I à 9 et 11 à 13 dans des compositions de moulage, composites, composites allégés, y compris mousses, SMC, BMC, stratifiés, pré-imprégnés, mastics, colles, revêtements, barrier coats, gel coats, revêtements IMC, bétons polyesters, marbres artificiels, et dans la réparation in situ de canalisations enterrées, y compris de conduites (pipes) pétrolières ou de conduites d'eau.

25. Utilisation d'au moins un pré-polymère selon l'une des revendications 8 ou 9 pour la préparation d'un pré-polymère tel que défini selon l'une des revendications 11 à 13, ou de mastics autoréticulables en présence d'humidité de l'air et à température ambiante.

26. Article fini obtenu par réticulation d'au moins une composition selon l'une des revendications 14 à 22 **caractérisé en ce qu'**il est sélectionné parmi les compositions de moulage (pièces moulées), composites, composites allégés, y compris mousses, stratifiés, préimprégnés, mastics, colles, revêtements, barrier coats, gel coats, revêtements IMC, bétons polyesters, marbres artificiels, panneaux sandwich d'isolation, moyens de protection thermique et mécanique, équipement de protection individuelle, pâles d'éoliennes, pièces automobile, peintures marines, pièces mécaniques, canalisations enterrées, y compris conduites (pipes) pétrolières ou conduites d'eau.

**Patentansprüche**

1. Ein ethylenisch ungesättigtes Prepolymer, umfassend mindestens eine kondensationsreaktive Endung X, gewählt aus den Gruppen Hydroxy und/oder Amino oder einer freien Isocyanatgruppe, und wahlweise eine ethylenisch ungesättigte Endung X', wobei das genannte Prepolymer ein Zahlengewichtsmittel Mn (gemessen per GPC mit Polystyrolstandards) im Bereich von 1000 bis 5000, vorzugsweise von 1200 bis 4500 hat, und einen Index X ausgedrückt in mg KOH/g im Bereich von 30 bis 150, vorzugsweise von 35 bis 120, wobei das genannte Prepolymer das Produkt der Reaktion der folgenden Komponenten A und B ist:

 A) eine erste Komponente A enthaltend folgende Mischung:

  i) mindestens ein erstes ethylenisch ungesättigtes Harz, das reaktive Hydroxy- und/oder Aminoenden trägt, gewählt aus den ungesättigten Polyestern mit einer OH-Zahl (gemessen an unverdünntem Festharz) von 70 bis 170 mg KOH/g und einer Säurezahl (gemessen an Harz in festem unverdünnten Zustand) von kleiner als 10 mg KOH/g, wobei die genannten ungesättigten Polyester auf Basis einer Säurekomponente sind enthaltend mindestens Maleinsäure und/oder Maleinsäureanhydrid und/oder Fumarsäure, wobei Säure und/oder aromatisches Anhydrid in einem Molverhältnis Maleinsäure/Aromat im Bereich von 0,6/0,4 bis 0,4/0,6 vorliegen, wobei das genannte Harz verdünnt ist in mindestens einem ethylenisch ungesättigten Monomer, das mit der ethylenischen Unsättigung des genannten Harzes copolymerisierbar ist,
  ii) wahlweise, in Anwesenheit von mindestens ein zweites Harz, das sich von dem Harz i) unterscheidet, gewählt aus:

- ethylenisch ungesättigten hydroxylierten Harzen, und vorzugsweise aus ungesättigten Polyestern, ungesättigten Polyesteramiden, ungesättigten Polyurethanestern oder Vinylestern, verdünnt in mindestens einem ethylenisch ungesättigten Monomer, und/oder
- gesättigten hydroxylierten und/oder aminierten Harzen, verdünnt in mindestens einem ethylenisch ungesättigten Monomer, und/oder

iii) wahlweise mindestens ein drittes gesättigtes reaktives Harz, gewählt aus den Polyetherpolyolen oder Polyesterpolyolen oder Polyaminen oder Polyepoxiden, mit einer Funktionalität von 2 oder 3, und vorzugsweise mit der Funktionalität 2, und mit einem Molekulargewicht $M_n$ von weniger als 400 g/Mol, und

iv) optional, mindestens ein ungesättigter Monoalkohol, verknüpft mit dem möglichen Vorhandensein der genannten ethylenischen Endung X', wobei bis zu 30% der OH + $NH_2$ Gesamtäquivalente, und vorzugsweise weniger als 20% der OH + $NH_2$ Gesamtäquivalente aus i) + ii) + iii) + iv) stammen, wobei der Wassergehalt der Komponente A 1000 ppm nicht überschreitet,

B) eine zweite Komponente B umfassend mindestens ein Polyisocyanat mit einer Funktionalität gleich oder größer als 2, und die bis zu 3 betragen kann, und vorzugsweise mit der Funktionalität 2, und wobei in dem Fall, wo die Funktionalität größer als 2 ist, entweder für die Komponente A oder für die Komponente B, die Herstellung der Prepolymere unter solchen Bedingungen erfolgt, dass die Anteile von A und B und die mittlere Funktionalität des Reaktionsgemischs A und B, die Relation von Macosko-Miller erfüllen, um jede Gelbildung durch Vernetzung zu vermeiden, wobei für die gewählte Funktionalität X folgende Bedingungen gewählt sind:

- für X = OH und/oder Amino, ein Äquivalenzverhältnis r = NCO / (OH + $NH_2$) im Bereich von 0,01 bis 0,6, vorzugsweise von 0,2 bis 0,5, und wobei die Komponente B, vorzugsweise schrittweise, in der Komponente A hinzugefügt wird, und
- für X = freies NCO, ein Äquivalenzverhältnis r = NCO / (OH + $NH_2$) im Bereich von 1,2 bis 3, vorzugsweise von 1,5 bis 2,5, und wobei die Komponente A, vorzugsweise schrittweise, in der Komponente B hinzugefügt wird.

2. Prepolymer gemäß Anspruch 1, **dadurch gekennzeichnet, dass** das Äquivalentgewicht durch ethylenische Unsättigung des Gerüsts des Prepolymers von 150 bis 2000 variiert, vorzugsweise von 170 bis 1500 g/Mol.

3. Prepolymer gemäß Anspruch 1 oder 2, **dadurch gekennzeichnet, dass** das Prepolymer ein Produkt der folgenden allgemeinen Formel umfasst oder daraus besteht:

$$R\text{-}(X)_{n-m}X'_m$$

mit: n im Bereich von 1,5 bis 3, und vorzugsweise von 1,5 bis 2,5 ist, und
m im Bereich von 0 bis 0,5, und vorzugsweise von 0 bis 0,3 ist, und
R ist das allgemeine Radikal resultierend aus der Reaktion von A mit B, welches die Endungen X und wahlweise X' trägt, und mit X = OH und/oder Amino oder freiem NCO, und
X' = ethylenische Unsättigung, können (Meth)acryl-, Vinyl- oder Allyl- sein.

4. Prepolymer gemäß einem der Ansprüche 1 bis 3, **dadurch gekennzeichnet, dass** das Verdünnungsmonomer mindestens eine ethylenisch ungesättigte Funktion trägt, und dass das Monomer gewählt ist aus Vinylmonomeren und/oder (Meth)acryl- und/oder Allylmonomeren.

5. Prepolymer gemäß irgendeinem der Ansprüche 1 bis 4, **dadurch gekennzeichnet, dass** das Harz i) eine Äquivalentmasse durch Unsättigung im Bereich von 140 bis 2000, und vorzugsweise von 140 bis 1250 g/Mol, hat.

6. Prepolymer gemäß irgendeinem der Ansprüche 1 bis 5, **dadurch gekennzeichnet, dass** das Polyisocyanat gewählt ist aus MDI, IPDI, H12MDI, TDI, HDI, dem Triisocyanat des HDI Isocyanurats, Isocyanaten abgeleitet von Uretdion, von Allophanat und von Biuret der zuvor genannten Diisocyanate.

7. Prepolymer gemäß einem der Ansprüche 1 bis 6, **dadurch gekennzeichnet, dass** die reaktive Funktion X Hydroxy und/oder Amino ist, und dass das Verhältnis Äquivalent NCO / Äquivalent (OH + $NH_2$) von 0,01 bis 0,6 variiert.

8. Prepolymer gemäß irgendeinem der Ansprüche 1 bis 6, **dadurch gekennzeichnet, dass** die reaktive Funktion X ein freies Isocyanat ist und dass das Äquivalentverhältnis NCO / (OH + $NH_2$) von 1,2 bis 3, und vorzugsweise von 1,5 bis 2,5 variiert.

9. Prepolymer gemäß Anspruch 8, **dadurch gekennzeichnet, dass** der verwendete Stabilisator eine Kombination BHT + PTZ in einer Menge im Bereich von 20 bis 1000 ppm und vorzugsweise von 60 bis 700 ppm ist.

10. Verfahren zur Herstellung des Prepolymers gemäß irgendeinem der Ansprüche 1 bis 9, **dadurch gekennzeichnet, dass** es die folgenden aufeinanderfolgenden Schritte in Abhängigkeit von der Funktionalität X umfasst:

- für X = OH und/oder $NH_2$:
- Beladen der Komponente A, wie vorstehend definiert, am Fuß des Reaktors, mit einer Kontrolle des Wassergehalts, um 1000 ppm nicht zu überschreiten, und vorzugsweise unterhalb 600 ppm zu sein,
- Zugabe, vorzugsweise schrittweise, der Komponente B in der Komponente A, so dass man einen Überschuss an OH + $NH_2$ entsprechend einem Äquivalentverhältnis r = NCO / (OH + $NH_2$) im Bereich von 0,01 bis 0,6, und vorzugsweise von 0,2 bis 0,5, hat, und wahlweise oder wenn nötig, in Anwesenheit eines Katalysators der Reaktion der Funktionen OH mit den Funktionen NCO,
- Reaktion bis zum nahezu vollständigen Verschwinden der Gruppen NCO, entsprechend hier einem Index (in verdünntem Zustand) von NCO entsprechend < 6 mg KOH/g, unter Bedingungen, bei denen kein Risiko für eine Gelbildung durch Vernetzung besteht, wie gemäß Anspruch 1 definiert,
- gegebenenfalls Zugabe eines Stabilisators,
- für X = freies NCO:
- Beladen der Komponente B enthaltend das Polyisocyanat in Anwesenheit von mindestens einem ethylenisch ungesättigten Monomer, wie zuvor definiert, am Fuß des Reaktors, Monomere, deren Wassergehalt man im Vorfeld, vor der Zugabe des Isocyanats, kontrolliert hat, so dass 10 ppm nicht überschritten werden, wenn nötig durch Verbrauchsreaktion mit einem Monoisocyanat, wie zum Beispiel Tosylisocyanat,
- Kontrolle des Wassergehalts der Komponente A, damit 1000 ppm, und vorzugsweise 500 ppm, nicht überschritten werden,
- wenn nötig Reduktion des Wassergehalts der Komponente A durch Verbrauchsreaktion mit einem Monoisocyanat,
- Zugabe, vorzugsweise schrittweise, der Komponente A auf die Komponente B, die das Polyisocyanat enthält, im Überschuss am Fuß des Reaktors, mit einem Äquivalentverhältnis r = NCO / (OH + $NH_2$) im Bereich von 1,2 bis 3, und vorzugsweise von 1,5 bis 2,5,
- Reaktion bis zum nahezu vollständigen Verschwinden der Gruppen OH (und äquivalenten Gruppen), was hier einem Index (in verdünntem Zustand) von < 3 mg KOH/g entspricht, unter Bedingungen, bei denen kein Risiko für eine Gelbildung durch Vernetzung besteht, wie gemäß Anspruch 1 definiert, und
- wahlweise, in einem Reaktionsschritt, Anwesenheit eines Katalysators der Reaktion der Funktionen OH mit den Funktionen NCO, und
- wahlweise Stabilisierung durch Zugabe eines Stabilisators.

11. Prepolymer erhältlich durch Reaktion von mindestens einem Prepolymer gemäß irgendeinem der Ansprüche 8 oder 9, mit einer reaktiven Komponente umfassend die Funktionen Y, die mit den genannten Funktionen X reaktiv sind.

12. Prepolymer gemäß Anspruch 11, **dadurch gekennzeichnet, dass** es erhalten wird durch Reaktion des Prepolymers gemäß irgendeinem der Ansprüche 8 oder 9 mit mindestens einem Monoalkohol. der mindestens eine ethylenische Unsättigung trägt.

13. Prepolymer gemäß Anspruch 12, **dadurch gekennzeichnet, dass** die Funktionen X quantitativ in Urethanendgruppen umgewandelt sind, die mindestens eine ethylenische Unsättigung tragen.

14. Vernetzbare Harzzusammensetzung umfassend mindestens ein Prepolymer gemäß irgendeinem der Ansprüche 1 bis 9 oder 11 bis 13, oder erhalten durch das Verfahren gemäß Anspruch 10.

15. Zusammensetzung gemäß Anspruch 14, **dadurch gekennzeichnet, dass** sie mindestens ein Prepolymer gemäß Anspruch 7 umfasst.

16. Zusammensetzung gemäß Anspruch 14, **dadurch gekennzeichnet, dass** sie mindestens ein Prepolymer gemäß irgendeinem der Ansprüche 8 oder 9 umfasst.

17. Zusammensetzung gemäß Anspruch 15, **dadurch gekennzeichnet, dass** sie zusätzlich mindestens ein Polyisocyanat mit einer Funktionalität im Bereich von 2 bis 3 umfasst, und wahlweise andere Polyol- oder Polyamin- oder Polyepoxidverbindungen, die reaktiv sind mit dem Polyisocyanat, mit einem Verhältnis Äquivalent NCO / Äquivalent (OH + NH$_2$) im Bereich von 0,6 bis 1,1.

18. Zusammensetzung gemäß irgendeinem der Ansprüche 14 bis 16, **dadurch gekennzeichnet, dass** sie keine anderen Co-Reaktanden außer dem genannten Prepolymer hat.

19. Zusammensetzung gemäß irgendeinem der Ansprüche 14 bis 16, **dadurch gekennzeichnet, dass** sie mindestens zwei Prepolymere umfasst: das eine gemäß Anspruch 7, und das andere gemäß irgendeinem der Ansprüche 8 oder 9.

20. Zusammensetzung gemäß Anspruch 14, **dadurch gekennzeichnet, dass** sie mindestens ein Prepolymer gemäß irgendeinem der Ansprüche 11 bis 13 umfasst.

21. Zusammensetzung gemäß irgendeinem der Ansprüche 14 bis 20, **dadurch gekennzeichnet, dass** sie eine Formzusammensetzung, Verbundwerkstoffe, leichter gemachte Verbundwerkstoffe einschließlich Schaumstoffe, SMC, BMC, Laminate, Prepregs, Spachtelmassen, Klebstoffe, Beschichtungen, Barrier Coats, Gelbeschichtungen, IMC-Beschichtungen, Polyesterbetons, Kunstmarmor ist.

22. Zusammensetzung gemäß Anspruch 20, **dadurch gekennzeichnet, dass** es sich um eine Beschichtungszusammensetzung, und vorzugsweise um eine Gelbeschichtungs-, eine Barrier Coat- oder eine IMC-Beschichtungszusammensetzung handelt.

23. Verfahren zur Herstellung einer vernetzbaren Zusammensetzung gemäß irgendeinem der Ansprüche 14 bis 22, **dadurch gekennzeichnet, dass** es mindestens den Schritt der Zugabe durch Mischen von mindestens einem Prepolymer gemäß irgendeinem der Ansprüche 1 bis 9 und 11 bis 13 in die genannte vernetzbare Zusammensetzung enthält.

24. Verwendung von mindestens einem Prepolymer gemäß irgendeinem der Ansprüche 1 bis 9 und 11 bis 13 in Formmassen, Formzusammensetzungen, Verbundwerkstoffen, leichter gemachten Verbundwerkstoffen einschließlich Schaumstoffen, SMC, BMC, Laminaten, Prepregs, Spachtelmassen, Klebstoffen, Beschichtungen, Barrier Coats, Gelbeschichtungen, IMC-Beschichtungen, Polyesterbetons, Kunstmarmor, und in der in situ-Reparatur von unterirdischen Rohrleitungen einschließlich Erdölrohrleitungen (Pipes) oder Wasserrohrleitungen.

25. Verwendung von mindestens einem Prepolymer gemäß irgendeinem der Ansprüche 8 oder 9 für die Herstellung von einem Prepolymer wie nach irgendeinem der Ansprüche 11 bis 13 definiert, oder von in Gegenwart von Luftfeuchtigkeit und bei Umgebungstemperatur selbst vernetzbaren Spachtelmassen.

26. Durch Vernetzung erhaltenes Enderzeugnis von mindestens einer Zusammensetzung gemäß irgendeinem der Ansprüche 14 bis 22, **dadurch gekennzeichnet, dass** es gewählt ist aus Formmassen (Gussteilen), Verbundwerkstoffen, leichter gemachten Verbundwerkstoffen einschließlich Schaumstoffen, Laminaten, Prepregs, Spachtelmassen, Klebstoffen, Beschichtungen, Barrier Coats, Gelbeschichtungen, IMC-Beschichtungen, synthetischen Betons, Kunstmarmor, Sandwichplatten für die Isolierung, Mitteln zum thermischen und mechanischen Schutz, persönlicher Schutzausrüstung, Windanlagenrotorblättern, Automobilteilen, Schiffsfarben, mechanischen Stücken, unterirdischen Rohrleitungen einschließlich Erdölrohrleitungen (Pipes) oder Wasserrohrleitungen.

## Claims

1. Ethylenically unsaturated prepolymer including at least one condensation-reactive terminal group X, selected from hydroxyl and/or amine or free isocyanate groups, and optionally a terminal group X' with ethylenic unsaturation, said prepolymer having a number average weight Mn (measured by GPC with polystyrene standards) ranging from 1000 to 5000, preferably from 1200 to 4500, and a number X expressed in mg KOH/g, ranging from 30 to 150, preferably from 35 to 120, with said prepolymer being the reaction product of the following components A and B:

    A) a first component A comprising the following mixture:

        i) at least one first ethylenically unsaturated resin carrying hydroxyl and/or amine reactive terminal groups, selected from the unsaturated polyesters having an OH number (measured on undiluted solid resin) from 70 to 170 mg KOH/g and an acid number (measured on resin in the undiluted solid state) of less than 10 mg KOH/g, said unsaturated polyesters being based on an acid component comprising at least maleic acid and/or anhydride and/or fumaric acid with an acid and/or aromatic anhydride in a maleic/aromatic molar ratio ranging from 0.6/0.4 to 0.4/0.6, said resin being diluted in at least one ethylenically unsaturated monomer which can be copolymerised with the ethylenic unsaturation of said resin,

ii) optionally, in the presence of at least one second resin different from resin i), selected from:

- ethylenically unsaturated hydroxylated resins, and preferably from unsaturated polyesters, unsaturated polyesteramides, unsaturated polyurethane esters or vinyl esters, in dilution in at least one ethylenically unsaturated monomer, and/or
- hydroxylated and/or amine saturated resins, in dilution in at least one ethylenically unsaturated monomer, and/or

iii) optionally, at least one third reactive saturated resin, selected from polyol polyethers or polyol polyesters or polyamines or polyepoxides, of functionality 2 or 3, and preferably of functionality 2, and with a molecular weight Mn of less than 400 g/mol, and

iv) optionally, at least one unsaturated monoalcohol, linked to the optional presence of said ethylenic terminal group X', up to 30% in equivalents of the total $OH + NH_2$, preferably less than 20% in equivalents of the total $OH + NH_2$ coming from i) + ii) + iii) + iv), with the water content of said component A not exceeding 1000 ppm,

B) a second component B comprising at least one polyisocyanate with a functionality equal to or greater than 2, and of up to 3, and preferably of functionality 2, and with, in the case where the functionality is greater than 2, either for the component A, or for the component B, the obtention of said prepolymers under conditions such that the proportions of A and B, and the mean functionality of the reaction mixture A and B, satisfy the Macosko-Miller equation, in order to avoid any gelling by crosslinking, with by functionality X selected the following conditions:

- for X = OH and/or amine, a ratio in r = $NCO/(OH + NH_2)$ equivalents ranging from 0.01 to 0.6, preferably from 0.2 to 0.5, and with said component B being added, preferably gradually, in said component A, and
- for X = free NCO, a ratio in r = $NCO/(OH + NH_2)$ equivalents ranging from 1.2 to 3, preferably from 1.5 to 2.5 and with said component A being added, preferably gradually, in said component B.

2. Prepolymer according to claim 1 **characterised in that** the equivalent weight by ethylenic unsaturation of the skeleton of said prepolymer varies from 150 to 2000, preferably from 170 to 1500 g/mol.

3. Prepolymer according to claim 1 or 2 **characterised in that** said prepolymer comprises or is composed of a product with the following general formula:

$$R\text{-}(X)_{n-m}X'_m$$

with: n ranging from 1.5 to 3, and preferably from 1.5 to 2.5, and
m ranging from 0 to 0.5, and preferably from 0 to 0.3, and
R being the global radical resulting from the reaction of A with B, which carries said terminal groups X, and optionally X', and
with X = OH and/or amine or free NCO, and
X' = ethylenic unsaturation, which may be (meth)acrylic, vinylic or allylic.

4. Prepolymer according to one of claims 1 to 3 **characterised in that** said dilution monomer carries at least one ethylenically unsaturated function, and **in that** said monomer is selected from vinyl and/or (meth)acrylic and/or allyl monomers.

5. Prepolymer according to one of claims 1 to 4 **characterised in that** said resin i) has an equivalent weight by unsaturation ranging from 140 to 2000, and preferably from 140 to 1250 g/mol.

6. Prepolymer according to one of claims 1 to 5 **characterised in that** said polyisocyanate is selected from MDI, IPDI, H12MDI, TDI, HDI, HDI isocyanurate triisocyanate, isocyanates derived from uretidione, allophanate and biuret of the preceding diisocyanates.

7. Prepolymer according to one of claims 1 to 6 **characterised in that** the reactive function X is hydroxyl and/or amine, and **in that** the ratio eq. NCO/eq. (OH + NH$_2$) varies from 0.01 to 0.6.

8. Prepolymer according to one of claims 1 to 6 **characterised in that** the reactive function X is a free isocyanate and **in that** said ratio in NCO/(OH + NH$_2$) equivalents varies from 1.2 to 3, and preferably from 1.5 to 2.5.

9. Prepolymer according to claim 8 **characterised in that** the stabiliser used is a BHT + PTZ combination in a quantity ranging from 20 to 1000 ppm, and preferably from 60 to 700 ppm.

10. Method for preparing the prepolymer according to one of claims 1 to 9 **characterised in that** it comprises the following successive steps according to the functionality X:

- for X = OH and/or NH$_2$:
- loading the component A, as defined previously, at the foot of the reactor with control of the water content so as not to exceed 1000 ppm, and preferably less than 600 ppm,
- adding, preferably gradually, the component B in said component A, so as to have an excess of OH + NH$_2$ corresponding to a ratio in r = NCO/OH + NH$_2$) equivalents from 0.01 to 0.6, and preferably from 0.2 to 0.5, and optionally or if necessary in the presence of a catalyst of the reaction of the OH functions with the NCO functions,
- reacting to almost complete disappearance of the NCO groups, corresponding here to an NCO number (in the diluted state) equivalent to < 6 mg KOH/g, under conditions of absence of any risk of gelling by crosslinking, as defined according to claim 1,
- optionally, adding a stabiliser,
- for X = free NCO:
- loading, at the foot of the reactor, said component B comprising said polyisocyanate in the presence of at least one ethylenically unsaturated monomer as defined previously, monomers of which previously, before the addition of the isocyanate, the water content will have been controlled, so as not to exceed 10 ppm, if necessary by consumption reaction with a monoisocyanate, such as tosylisocyanate,
- controlling the water content of component A so as not to exceed 1000 ppm, and preferably 500 ppm,
- if necessary, reducing the water content of component A, by consumption reaction with a monoisocyanate,
- adding, preferably gradually, component A to said component B comprising said polyisocyanate in excess at the foot of the reactor, with a ratio in r = NCO/(OH + NH$_2$) equivalents from 1.2 to 3, preferably from 1.5 to 2.5,
- reacting to almost complete disappearance of the OH groups (and equivalent groups), which corresponds here to a number (in the diluted state) equivalent to < 3 mg KOH/g, under conditions of absence of any risk of gelling by crosslinking as defined according to claim 1, and
- optionally, at the reaction step, the presence of a catalyst of the reaction of the OH functions with the NCO functions, and
- optionally, stabilising by adding a stabiliser.

11. Prepolymer which may be obtained by reacting at least one prepolymer according to one of claims 8 or 9, with a reactive component including Y functions reactive with said X functions.

12. Prepolymer according to claim 11 **characterised in that** it is obtained by reaction of the prepolymer according to one of claims 8 or 9 with at least one monoalcohol carrying at least one ethylenic unsaturation.

13. Prepolymer according to claim 12 **characterised in that** said X functions are converted quantitatively into urethane terminal bonds carrying at least one ethylenic unsaturation.

14. Crosslinkable resin composition comprising at least one prepolymer according to one of claims 1 to 9 or 11 to 13, or obtained by the method according to claim 10.

15. Composition according to claim 14 **characterised in that** it comprises at least one prepolymer according to claim 7.

16. Composition according to claim 14 **characterised in that** it comprises at least one prepolymer according to one of claims 8 or 9.

17. Composition according to claim 15 **characterised in that** it also comprises at least one polyisocyanate with functionality ranging from 2 to 3, and optionally other polyol or polyamine or polyepoxide compounds reactive with said polyisocyanate, with a ratio eq. NCO/eq. (OH + NH$_2$) from 0.6 to 1.1.

18. Composition according to one of claims 14 to 16 **characterised in that** it is without the presence of other coreactants apart from said prepolymer.

19. Composition according to one of claims 14 to 16 **characterised in that** it comprises at least two prepolymers: one according to claim 7 and the other according to one of claims 8 or 9.

20. Composition according to claim 14 **characterised in that** it comprises at least one prepolymer according to one of claims 11 to 13.

21. Composition according to one of claims 14 to 20 **characterised in that** it is a moulding composition or a composition of composites, light composites, including foams, SMC, BMC, laminated compositions, preimpregnated compositions, mastics, adhesives, claddings, barrier coats, gel coats, IMC claddings, polyester concretes or artificial marbles.

22. Composition according to claim 20 **characterised in that** it is a cladding composition, preferably a gel coat, barrier coat or IMC cladding composition.

23. Method for preparing a crosslinkable composition as defined according to any of claims 14 to 22 **characterised in that** it comprises at least the step of adding by mixing at least one prepolymer according to one of claims 1 to 9 and 11 to 13 in said crosslinkable composition.

24. Use of at least one prepolymer according to one of claims 1 to 9 and 11 to 13 in moulding compositions, composites, light composites, including foams, SMC, BMC, laminated compositions, preimpregnated compositions, mastics, adhesives, claddings, barrier coats, gel coats, IMC claddings, polyester concretes or artificial marbles, and in the in situ repair of buried pipes, including oil pipes and water pipes.

25. Use of at least one prepolymer according to one of claims 8 or 9 for preparing a prepolymer as defined in one of claims 11 to 13, or of mastics that are self-crosslinking in the presence of moisture in the air and at ambient temperature.

26. Finished article obtained by crosslinking at least one composition according to one of claims 14 to 22 **characterised in that** it is selected from moulding compositions (moulded parts), composites, light composites, including foams, laminated compositions, preimpregnated compositions, mastics, adhesives, claddings, barrier coats, gel coats, IMC claddings, polyester concretes, artificial marbles, insulating sandwich panels, thermal and mechanical protection means, individual protection equipment, wind-turbine blades, automobile components, marine paints, mechanical parts, buried pipes, including oil pipes or water pipes.

Effet du DGEBA sur la stabilité du pré-polymère K, issu de la résine B'

FIG. 1

**Effet du mélange CN 151/SR 206 sur le pré-polymère A issu de la résine B'**

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4327145 A
- JP 56152829 B
- JP 2004059647 A
- EP 545824 A
- EP 203361 A
- US 4289682 A
- US 4107101 A
- US 4822849 A

**Littérature non-brevet citée dans la description**

- **MACOSKO-MILLER.** *Macromolecules,* 1976, vol. 9, 199-211